# NEUE EUROPÄISCHE PATENTSCHRIFT

(11) **EP 1 313 675 B2**
(45) Veröffentlichungstag und Bekanntmachung des Hinweises auf die Entscheidung über den Einspruch: **01.04.2015**
(45) Hinweis auf die Patenterteilung: 20.05.2009
(21) Anmeldenummer: 00954649.0
(22) Anmeldetag: 24.08.2000
(51) Int. Cl.: C03C 10/12, C03C 4/02

(54) **TRANSPARENTE, MIT VANADIUMOXID-ZUSATZ DUNKEL EINFÄRBBARE GLASKERAMIK**
TRANSPARENT GLASS CERAMICS THAT CAN BE DARKENED BY ADDING VANADIUM OXIDE
VITROCERAMIQUE TRANSPARENTE FONCEE A L'AIDE D'UN AJOUT D'OXYDE DE VANADIUM

(43) Veröffentlichungstag der Anmeldung: 28.05.2003
(60) Teilanmeldung: 09159554.6
(73) Patentinhaber: Schott AG, 55122 Mainz (DE)
(72) Erfinder: SIEBERS, Friedrich, 55283 Nierstein (DE); NASS, Peter, 55120 Mainz (DE); RODEK, Erich, 55126 Mainz (DE)
(74) Vertreter: Mehler Achler
(86) Internationale Anmeldenummer: PCT/EP2000/008248
(87) Internationale Veröffentlichungsnummer: WO 2002/016279

(56) Entgegenhaltungen:
- EP-A- 0 156 479
- EP-A- 0 578 022
- EP-A1- 0 156 479
- EP-A1- 1 078 889
- DE-A- 3 703 342
- JP-A- H11 100 229
- JP-A- H11 100 230
- JP-A- H11 228 180
- US-A- 3 252 811
- US-A- 3 834 911
- US-A- 4 084 974
- US-A- 4 461 839
- US-A- 5 446 008
- US-A- 5 446 008
- US-A- 5 922 271
- DATABASE WPI Section Ch, Week 199925 Derwent Publications Ltd., London, GB; Class L01, AN 1999-296403 XP002155032 & JP 11 100230 A (NIPPON ELECTRIC GLASS CO), 13. April 1999 (1999-04-13)
- DATABASE WPI Section Ch, Week 199925 Derwent Publications Ltd., London, GB; Class L01, AN 1999-296402 XP002155033 & JP 11 100229 A (NIPPON ELECTRIC GLASS CO), 13. April 1999 (1999-04-13)
- SCHOLZE, HORST: 'GLAS-NATUR, STRUKTUR UND EIGENSCHAFTEN', 1988, SPRINGER-VERLAG, BERLIN Seiten 217 - 219
- ELVERS, B. ET AL: 'British Library Cataloguing in Publication Data: "Ullmann's encyclopedia of industrial chemistry"', Bd. A12, 1989, VCH VERLAGSGESELLSCHAFT MBH, WEINHEIM
- ILLIG, H.-J.: 'ABC GLAS', 1991, DEUTSCHER VERLAG FÜR GRUNDSTOFFINDUSTRIE, LEIPZIG Seite 165
- DOREMUS, R.: 'Glass Science', 1994, JOHN WILEY & SONS INC., NEW YORK Seiten 201 - 202
- JOHNSTON, W.D.: 'Optical Spectra of the Various Valence States of Vanadium in Na²O.2SiO² Glass' JOURNAL OF THE AMERICAN CERAMIC SOCIETY Bd. 48, 1965, Seiten 608 - 611
- BAMFORD, C.R.: 'Colour Generation and Control in Glass, 2', 1997, ELSEVIER SCIENTIFIC PUBLISHING COMPANY, AMSTERDAM Seiten 82 - 84
- BEALL, G.H. ET AL: 'Crystallization and Chemical Strengthening of Stuffed ß-Quartz Glass-Ceramics' JOURNAL OF THE AMERICAN CERAMIC SOCIETY Bd. 50(5), April 1967, Seiten 181 - 189
- SWARTS, E.L.: 'Introduction to Glass Science', 1972, PLENUM PRESS, NEW YORL Seiten 300 - 303

## Beschreibung

Die Erfindung hat ein Verfahren zur Herstellung einer transparenten mit Vanadiumoxid-Zusatz dunkel eingefärbten Glaskeramik mit Hochquarz-Mischkristallen als vorherrschende Kristallphase zum Gegenstand.

Glaskeramiken mit Hochquarz-Mischkristallen als vorherrschende Kristallphase sind bekannt. Eine Schlüsseleigenschaft dieser Glaskeramiken ist, dass mit ihnen Werkstoffe herzustellen sind die in einem vorgegebenen Temperaturbereich über äußerst niedrige Wärmeausdehnungskoeffizienten verfügen. In der Regel wird das thermische Ausdehnungsverhalten so eingestellt, dass die Werkstoffe im Bereich ihrer Anwendungstemperaturen über thermische Nullausdehnung verfügen. So wird z.B. bei Anwendung als Substratmaterial, Waferstages oder Spiegelträger für Teleskope die thermische Ausdehnung in der Gegend der Raumtemperatur minimiert. Bei Anwendung als transparente Kaminsichtscheibe oder dunkel eingefärbte Kochflächen wird die thermische Nullausdehnung in einem Temperaturbereich zwischen Raumtemperatur und ca. 700°C auf möglichst niedrige Werte eingestellt.

In transparenter Form z.B. bei Anwendung als Brandschutzglas, Kaminsichtscheibe oder Kochgeschirr wird in der Regel hohe Transparenz, bevorzugt eine Lichttransmission im Sichtbaren größer als 80 % und ein definiert eingestellter Farbton gewünscht. Bei Anwendung als Kochfläche ist eine dunkle Einfärbung gewünscht, die vor der Durchsicht auf die technischen Aufbauten unter der Kochfläche schützt. Gewünscht ist ein Transmissionsverhalten, das es erlaubt, während des Betriebs, auch bei niedriger Leistung, die Heizelemente gut zu erkennen, während sie im unbenutzten Zustand durch die Kochfläche abgedeckt werden sollen. Dabei dürfen andererseits bei hohen Heizleistungen, insbesondere beim Einsatz von hellen Halogenstrahlern, die Augen nicht geblendet oder durch schädliche Strahlungen gefährdet werden. Im IR-Bereich soll die Transmission möglichst hohe Werte erreichen, damit die Wärmestrahlung direkt auf den Topfboden wirken kann, um so die Regelung und die Ankochgeschwindigkeit zu verbessern. Gewünscht ist also eine Kombination von definiert eingestellter hoher Absorption im Sichtbaren kombiniert mit niedriger Absorption im IR. Diese Forderungen werden für eine 4 mm dicke Probe mit einer Lichttransmission gemessen nach DIN 5033, im Sichtbaren von τ < 5% und eine IR-Transmission bei 1600 nm von größer 65% gewährleistet.

Bei der großtechnischen Herstellung von Glaskeramiken werden Arsen- und/oder Antimonoxid als Läutermittel eingesetzt. Diese Läutermittel sind verträglich mit den geforderten Glaskeramikeigenschaften und führen zu guten Blasenqualitäten bzw. geringen Blasenzahlen bei der Schmelze. Auch wenn diese Stoffe im Glas fest im Gerüst eingebunden sind, so sind sie doch unter Sicherheits- und Umweltschutzaspekten nachteilig, weil bei der Rohstoffgewinnung, Aufbereitung und wegen der Verdampfung bei der Schmelze, sowie bei Nachverarbeitungsprozessen besondere Vorsichtsmaßnahmen ergriffen werden müssen. Bei der Entsorgung ausgedienter Glaskeramik-Produkte und der Stäube und Schlämme aus der Produktion beeinträchtigt der Arsen- bzw. Antimon-Gehalt die Recycling- und Deponiefähigkeit. Beim Recycling sind diese Stoffe oftmals unerwünscht. Stäube und Schlämme sind wegen ihrer großen Oberfläche aufgrund der Grenzwerte zur Lässigkeit von Arsen bzw. Antimon in der Regel nur auf Sondermülldeponien zu entsorgen.

Es ist bekannt, daß die Herstellung von Glaskeramikprodukten in verschiedenen Stufen abläuft. Nach der Schmelze und Heißformgebung wird das Material üblicherweise unter die Transformationstemperatur des Glases abgekühlt. Anschließend wird das Ausgangsglas durch gesteuerte Kristallisation in den glaskeramischen Artikel überführt. Diese Keramisierung erfolgt in einem zweistufigen Temperaturprozeß bei dem zunächst durch Keimbildung bei einer Temperatur zwischen 600°C und 800°C Keime, üblicherweise aus zirkontitanhaltigen Mischkristallen, erzeugt werden. Bei anschließender Temperaturerhöhung wachsen bei der Kristallisationstemperatur die Hochquarz-Mischkristalle auf diesen Keimen auf.

Durch die Glaskeramik-Zusammensetzung muß sichergestellt sein, daß bei der Heißformgebung des glaskeramischen Artikels noch keine unerwünschte Kristallisation (Entglasung) auftritt und andererseits bei der nachfolgenden Keramisierung ein gutes und steuerbares Kristallisationsverhalten mit akzeptablen Prozeßzeiten erreicht wird. Bei vielen Formgebungsprozeßen so z.B. auch beim Walzen von Platten, die als Kochflächen Verwendung finden, findet die Formgebung in der Nähe der Verarbeitungstemperatur V_{A} des Glases (Viskosität η =10⁴ dPas) statt. Für das Entglasungsverhalten muß dabei gewährleistet sein, daß die obere Entglasungstemperatur der Schmelze nicht oberhalb der Verarbeitungstemperatur zu liegen kommt. Ansonsten werden sich unerwünschte Kristalle im Glas kaum vermeiden lassen. Aufgrund ihrer Größe und des Wachstums während der Keramisierung zu noch größeren Kristallen wirkt sich die Entglasung schädlich für die Festigkeit der glaskeramischen Artikel aus. Bei besonders großen Kristallen können diese sogar besonders in transparenten Glaskeramiken visuell auffällig werden.

Neben den genannten Schlüsselanforderungen an Glaskeramiken, basierend auf Hochquarz-Mischkristallen als vorherrschende Kristallphase, wie z.B. niedrige thermische Ausdehnung im relevanten Anwendungsbereich, Transparenz bzw. dunkle Einfärbbarkeit, gibt es eine Reihe weiterer wichtiger Anforderungen abhängig von der jeweiligen Anwendung. So ist bei längerem Einsatz bei hohen Temperaturen wie z.B. Kaminsichtscheiben oder Kochflächen eine hohe Temperatur/Zeit-Belastbarkeit erforderlich. Der für das gute Thermoschockverhalten verantwortliche niedrige Ausdehnungskoeffizient darf sich unter der thermischen Belastung während des Einsatzes nicht unzulässig verändern. Mit der thermischen Belastung beim praktischen Einsatz einhergehende Gefügeänderungen verbunden mit Längenänderungen (Compaction) dürfen nicht zu lokalen Zugspannungen und damit verbunden unzulässigen Festigkeitserniedrigungen führen. Besonders kritisch ist dieses Phänomen bei Kochflächen, bei denen thermisch belastete Bereiche (die Kochzonen) an Bereiche, die im wesentlichen bei Raumtemperatur verbleiben, angrenzen. In diesem Grenzbereich dürfen keine unzulässig hohen Compaction-Spannungen auftreten. Bei vielen Anwendungen werden hohe Anforderungen an die chemische Beständigkeit der glaskeramischen Artikel gestellt. Kaminsichtscheiben haben oftmals direkten Kontakt mit schwefelhaltigen Abgasen, bei Anwendungen als Kochflächen wirken oft säurehaltige Bestandteile, z.B. beim Überkochen von Nahrungsbestandteilen oder bei Verwendung von säurehaltigen Haushaltsreinigern auf die Kochfläche ein, was im Bereich hoher Temperaturen noch mit einer zusätzlichen Belastung verbunden ist. Bei der Anwendung als Kochfläche ist es weiterhin hinsichtlich der Temperatur/Zeit-Belastbarkeit von Nachteil, wenn sich die Bereiche der Kochzonen mit thermischer Belastung im Einsatz bzgl. ihrer Transmission verändern. Bei diesem Effekt, auch als "Nachdunklung" bezeichnet, führt die Temperatur/Zeit-Belastung zu einem weiteren Absinken der Transmission im Bereich der heißen Kochzone und damit zu störenden Farbunterschieden zwischen Kochzonen und Kaltbereichen der Kochfläche.

Für Anwendungen bei denen es nicht auf die sehr niedrige oder thermische Nullausdehnung ankommt, sondern bei der die Höhe der Temperaturbelastbarkeit im Vordergrund steht, sollte es möglich sein, die bevorzugt Hochquarz-Mischkristalle enthaltende Glaskeramik in Keatit-Mischkristall enthaltende Glaskeramik umzuwandeln. Diese Umwandlung erfolgt bei akzeptablen Prozeßzeiten in einem Temperaturbereich von ca. 900°C bis 1200°C. Die bevorzugt Keatit-Mischkristalle enthaltenden Glaskeramiken verfügen über einen thermischen Ausdehnungskoeffizient zwischen Raumtemperatur und 700°C in der Größenordnung von ungefähr 1 x 10⁻⁶/K. In der Regel besitzen Glaskeramiken mit Keatit-Mischkristall als Hauptphase über einen transluzenten oder weißen Farbton. Bei Zusatz von Farboxiden wird der Weißton entsprechend der Farbwirkung des Farboxids überfärbt.

Bekannte Glaskeramiken, die die Einfärbung mit Vanadiumoxid ermöglichen und zu großtechnisch hergestellten Glaskeramikprodukten geführt haben, werden mit Arsen und/oder Antimonoxid geläutert.

Die EP 0437228 A1 beschreibt eine Glaskeramik mit Hochquarz-Mischkristallen als vorherrschende Kristallphase, die in eine weiße opake Glaskeramik mit Keatit-Mischkristallen umwandelbar ist, wobei die Zusammensetzung notwendigerweise Arsen- und Antimonoxid (As₂O₃+Sb₂O₃=0,5-1,5 Gew.-%) enthält.

Die EP 0220333 B1 beschreibt ebenfalls eine Glaskeramik die notwendigerweise Antimon und/oder Arsenoxid (Sb₂O₃+As₂O₃=0,5-2,5 Gew.-%) enthält.

Die EP 0156479 B1 beschreibt ein Verfahren zum Läutern eines geschmolzenen Lithium-Alumino-Silicat-Glases mit dem Läutermittel Cerdioxid oder Cerat-Verbindungen. Die beschriebenen Gläser sind frei von Arsen und Antimon, die Einfärbbarkeit mit Vanadiumoxid ist jedoch nicht ausreichend. Selbst bei vergleichsweise hohen V₂O₅-Gehalten ≥ 0,5 Gew.-% wird bei 630 nm eine sehr hohe Transmission von ≥ 23 % gemessen. Auch die beschriebenen hohen thermischen Ausdehnungskoeffizienten zwischen 20 und 700°C von 4,9 - 9,5 x 10⁻⁷/K sind für die Verwendung als dunkel eingefärbte Kochfläche nachteilig.

Arsenoxid-freie Glaskeramiken werden in den Schriften JP 11-100229 A bzw. JP 11-100230 A beschrieben. Als Läutermittel werden 0,1 bis 2 Gew.-% SnO₂ und Chloride mit Cl von 0 bis 1 Gew.-% genannt. Es ist eine Läutertemperatur von größer 1400 °C angegeben, diese wird in den Ausführungsbeispielen durch die Angabe 1550 bis 1650 °C konkretisiert. Der V₂O₅-Gehalt der Glaskeramiken beträgt 0,03 bis 0,5 Gew.-% bzw. 0,01 bis 0,03 Gew.-%.

Die Schrift US 5,446,008 beschreibt ein Verfahren zur Herstellung einer transparenten oder transluzenten Glaskeramik mit Hochquarz- und/oder Keatit-Mischkristallen als wesentlichen Kristallphasen. Der Wassergehalt in der Glasschmelze wird dabei durch Zugabe von 0,01 bis 2 Masse-% Kohlenstoff zum Gemenge, insbesondere durch Zugabe von reinem elementarem Kohlenstoff und/oder von Carbiden und/oder von organischen Kohlenstoffverbindungen eingestellt. Die Zugabe der genannten Zusätze dient der chemischen Entwässerung der Glasschmelze, wobei die OH-Gruppen unter Bildung von leicht flüchtigen, organischen Verbindungen, wie z. B. Methan, aufgespalten werden. Durch die Zugabe der genannten Zusätze entstehen stark reduzierende Bedingungen, deshalb kann dieses Verfahren zur Einstellung des Wassergehaltes nur für Glasschmelzen eingesetzt werden, die von polyvalenten Komponenten wie Vanadiumoxid weitgehend frei sind.

Es ist bekannt, daß SnO₂ in Glaskeramiken als Keimbildner Verwendung finden kann. Dies wird genutzt, um den Gehalt an dem Keimbildner TiO₂ zu verringern.

Damit ist es möglich, transparente Glaskeramiken zu erhalten, die aufgrund niedrigeren Gehaltes an dem störenden Eisen/Titan-Komplex über eine sehr geringe Eigenfärbung verfügen. So beschreibt die JP 09169542 A eine transparente Glaskeramik mit Hochquarz-Mischkristallen als vorherrschender Kristallphase und einer Zusammensetzung, die 0 - 1 Gew.-% TiO₂ und 1 - 4 Gew.-% SnO₂ enthält. Zum Erzielen hoher Transparenz wird Arsenoxid als Läutermittel eingesetzt. Die hohen SnO₂-Gehalte ≥ 1 Gew.-% wirken sich negativ auf das Entglasungsverhalten aus.

Es ist Aufgabe der Erfindung, ein Verfahren zur Herstellung transparenter Glaskeramiken mit Hochquarz-Mischkristallen als vorherrschender Kristallphase bereitzustellen, wobei die Glaskeramiken durch Zusatz von Vanadiumoxid dunkel eingefärbt sein sollen. Die dunkel eingefärbten Glaskeramiken sollen im Sichtbaren über einen Lichttransmissionsgrad τ < 5 % kombiniert mit einer IR-Transmission bei 1600 nm τ > 65 % verfügen. Ferner sollen die Glaskeramiken über eine hohe Entglasungsfestigkeit verfügen und für Anwendungen bei hoher Temperaturbelastung über eine hohe Temperatur/Zeitbelastbarkeit hinsichtlich Änderungen ihrer Eigenschaften wie z. B. thermischer Ausdehnung, Compaction, Compaction-Spannung, Transmission und über eine gute chemische Beständigkeit verfügen, damit sie in transparenter bzw. in dunkel eingefärbter Form ein breites Anwendungsspektrum abdecken können.

Diese Aufgabe wird durch ein Verfahren gemäß Anspruch 1 gelöst.

Bei der transparenten, mit Vanadiumoxid-Zusatz dunkel eingefärbten Glaskeramik mit Hochquarz-Mischkristallen als vorherrschende Kristallphase, ist vorgesehen, dass die Glaskeramik, bis auf unvermeidliche Spuren, keines der chemischen Läutermittel Arsenoxid und Antimonoxid enthält und die dunkel eingefärbte Glaskeramik eine Lichttransmission im Sichtbaren von T < 5 % und eine IR-Transmission bei 1600 nm von größer 65 % für die 4 mm dicke Glaskeramik aufweist, die durch eine Kombination des Farboxids Vanadiumoxid mit SnO₂ als ein der Glasschmelze zugesetztes festes Reduktions- und Läutermittel sowie einer Läuterung der Glasschmelze bei Temperaturen oberhalb 1700°C eingestellt ist.

Die Glaskeramiken zeichnen sich also durch eine Zusammensetzung ohne Verwendung von Arsen- und Antimonoxid als Läutermittel aus, welche in bekannten Glaskeramiken als Redoxpartner für das im Glasgerüst eingebaute Vanadium während der Keramisierung dienen und somit für die Einfärbung durch Vanadium eine ursächliche Rolle sielen. Wie unsere Untersuchungen gezeigt haben, spielen die Läutermittel Arsen- und Antimonoxid jedoch eine Schlüsselrolle als Redoxpartner bei der Überführung des Vanadiums in den färbenden Zustand. Diese Einfärbung findet statt, wenn die Ausgangsgläser in die Glaskeramik umgewandelt werden. Die Eliminierung der genannten Läutermittel wird erschwert, wenn eine kontrollierte Einfärbbarkeit mit Vanadiumoxid erhalten bleiben soll. Die Untersuchungen werden an späterer Stelle ausführlich dargelegt.

Es ist wirtschaftlich vorteilhaft, wenn aus einer transparenten Glaskeramik bei gleicher Grundzusammensetzung durch Zusatz von Vanadiumoxid eine dunkle Einfärbung erreicht werden kann. Hinsichtlich der Fertigungslogistik, sind Rohstoffbeschaffung, Rohstoffbevorratung und Gemengeherstellung einfacher zu bewerkstelligen. Scherben aus der transparenten Glaskeramik können bei der Schmelze der eingefärbten Glaskeramik verwendet werden. Aufgrund der geringfügigen Zusammensetzungsunterschiede sind Viskositäts- und Keramisierungsverhalten ähnlich, so dass die Schmelztemperaturen, Formgebungsparameter und die Keramisierungsbedingungen in den Fertigungsanlagen beibehalten werden können oder nur geringfügig modifiziert werden müssen.

Obwohl auf die ohnehin umweltproblematischen Läutermittel Arsen- und Antimonoxid verzichtet wurde, konnten die Vorteile einer einheitlichen Grundzusammensetzung sowohl für transparente als auch dunkel eingefärbte Glaskeramiken beibehalten werden. Die Glaskeramiken können durch Zusätze von Vanadiumoxid dunkel eingefärbt werden. Die Einfärbung erfolgt während der Keramisierung, d. h. bei der Umwandlung vom glasigen in den glaskeramischen Zustand. Im glasigen Ausgangszustand wird durch den Vanadiumoxid-Zusatz eine leichte Grünfärbung mit einer Lichttransmission von ca. 50 - 70 % beobachtet. In Glaskeramiken, die frei sind von Arsen- und Antimonoxid, tritt die Einfärbung beim Keramisieren nicht in ausreichendem Maße auf, die Farbwirkung des Vanadiums geht überraschenderweise verloren.

Wie unsere Untersuchungen gezeigt haben, beeinflussen die Läutermittel Arsen- und Antimonoxid auch das Entglasungsverhalten und führen zu einer Erniedrigung der oberen Entglasungstemperatur. Bei Eliminierung der genannten Läutermittel muss dafür gesorgt werden, dass das Entglasungsverhalten nicht negativ beeinträchtigt wird. Die Problematik der verschlechterten Entglasungsfestigkeit bei Eliminierung der Läutermittel Arsen- bzw. Antimonoxid wurde durch Anpassung der Zusammensetzung gelöst. Dazu wurden die für die Entglasung kritischen Kristallphasen identifiziert und die kritischen Zusammensetzungskomponenten eingegrenzt.

Die Glaskeramiken finden ein breites Anwendungsgebiet und die gefundenen Zusammensetzungen, ohne Verwendung von Arsen- und Antimon, zeichnen sich durch hervorragende Anwendungseigenschaften hinsichtlich ihrer Entglasungsfestigkeit, Zeit/Temperatur-Belastbarkeit, chemischer Beständigkeit aus, die über den Stand bekannter arsen-/antimonhaltiger Glaskeramiken hinausgehen.

Die ablaufenden Mechanismen bei der Einfärbbarkeit arsen-/antimonfreier Glaskeramiken durch Vanadiumoxid wurde eingehend untersucht (Tabelle 1). Dabei bezeichnen die Beispiele 1 und 2 konventionell mit Antimonoxid geläuterte Glaskeramiken, die bei gleicher Grundzusammensetzung ohne und mit Vanadiumoxid erschmolzen wurden. Bei den angegebenen Keramisierungsbedingungen bleibt die vanadiumoxidfreie Zusammensetzung transparent, die vanadiumhaltige zeigt die gewünschte dunkle Einfärbung. Die entsprechende antimonfreie und vanadiumhaltige Zusammensetzung von Beispiel 3 verliert plötzlich ihre Einfärbbarkeit. Für das Vanadium ist charakteristisch, dass es mehrere Oxide verschiedener Wertigkeiten bilden kann, wobei Überlänge von einem Oxidationszustand in den anderen durch Verschiebung des Redoxgleichgewichts erfolgen können. Die Wertigkeitszustände des Vanadiums sind schwierig zu charakterisieren. Deshalb wurde das über Mößbauer-Messung leichter zugängliche Antimon bzw. Zinn in seinem Wertigkeitszustand charakterisiert (Tabelle 1). Es zeigt sich, dass Antimon im glasigen Ausgangszustand in 3-wertiger Form vorliegt, beim Keramisieren erfolgt ein teilweise Wertigkeitswechsel in den 5-wertigen Zustand wobei sich die vanadiumoxidfreien bzw. -haltigen Schmelzen 1 und 2 deutlich unterscheiden. Bei Anwesenheit von Vanadium (Beispiel 2) wird deutlich mehr Antimon in den 5-wertigen Zustand überführt. Bei gleichen Herstellbedingungen und gleicher Grundzusammensetzungen unterscheiden sich die beiden Schmelzen nur in ihrem Vanadiumoxidgehalt. Es läßt sich daher folgern, daß das Antimon als Redoxpartner für die Reduktion des Vanadiums in einen niedrigeren färbenden Oxidationszustand fungiert. Dieser Redoxvorgang ist Voraussetzung für die Überführung des Vanadiumoxids in den färbenden Zustand wie das Beispiel 3 zeigt. Ohne Antimon geht die Färbewirkung des Vanadiums zum größten Teil verloren, die Lichttransmission beträgt τ = 29,5 %. Bei Einsatz von Arsenoxid als Läutermittel wird ein entsprechender Redoxvorgang aufgrund der chemischen Ähnlichkeit von Arsen und Antimon erfolgen können. Der beschriebene Redoxvorgang des Vanadiums ist ein notwendiger Prozeß in der Kette, die vom nicht färbenden Vanadium zum färbenden führt. Unsere Untersuchungen zeigten weiterhin, daß nicht alles Vanadium in den färbenden Zustand überführt wird. So lassen sich mit unterschiedlichen Vanadiumoxidgehalten zwischen 0,06 und 0,4 Gew.-% vergleichbare Einfärbungen je nach Zusammensetzung und Redoxzustand bei der Schmelze erreichen. Die Zusammensetzungen mit höheren Vanadiumoxidgehalten zeigen dabei unerwünschterweise eine geringere Infrarot-Transmission. Es wird daher angenommen, daß nach dem Keramisieren das Vanadium in verschiedenen Anteilen von färbendem und nicht färbenden Zustand vorliegt, wobei auch das im Sichtbaren nicht färbende Vanadium im Infraroten die Transmission absenkt. In bekannten Glaskeramikzusammensetzungen zeigen neben der dominierenden Komponente Arsen/Antimon als Redoxpartner auch hohe Gehalte an TiO₂ eine geringe aber nicht ausreichende Unterstützung der Einfärbung durch Vanadium.

Die Einfärbung über das Farboxid Vanadiumoxid wird gegenüber anderen Farboxiden bevorzugt, weil dieses über die Kombination von hoher Absorption im Sichtbaren und niedriger Absorption im Infraroten verfügt. Damit ist es möglich, im Sichtbaren einen Lichttransmissionsgrad von τ < 5 % zu erreichen, kombiniert mit einer Infrarot-Transmission bei 1600 nm von größer als 65 %. Bei Verwendung wirksamer Reduktionsmittel für V₂O₅ ist es sogar möglich die geforderte niedrige Lichttransmission kombiniert mit einer IR-Transmisson bei 1600 nm von > 70 % und > 80 % zu erreichen.

Bevorzugt weist die durch Kombination des Farboxids Vanadiumoxid mit wenigstens einem der Glasschmelze zugesetzten festen, flüssigen oder gasförmigen Reduktionsmittel dunkel eingefärbte Glaskeramik eine Lichttransmission im Sichtbaren von τ < 2,5 % und eine IR-Transmission bei 1600 nm von größer 70 % für die 4 mm dicke Glaskeramik auf. Bei dem erfindungsgemäßen Verfahren werden diese Werte bevorzugt eingestellt: Insbesondere wenn Heizkörper mit hoher Leistung, z.B Halogenstrahler unter der Kochfläche eingesetzt werde, sollte die Lichttransmission weniger als 2,5 % betragen und die IR-Transmission bei 1600 nm größer als 70 % sein.

Die Problematik der Einfärbbarkeit arsen-/antimonfreier Glaskeramiken mit Vanadiumoxid wurde gelöst durch die Kombination des Färbemittels Vanadiumoxid mit SnO₂ als ein der Glasschmelze zugesetztes festes Reduktions- und Läutermittel.

Arsen- und/oder Antimonoxid sind wirksame Läutermittel bei hohen Schmelztemperaturen um 1550 - 1650 °C wie sie für Glaskeramikzusammensetzungen notwendig sind. Mit ihnen werden sehr gute Blasenqualitäten bzw. geringe Blasenzahlen erreicht, wie sie für viele Produkte aus Glaskeramik vorausgesetzt werden. Um die geforderten Blasenqualitäten ohne deren Verwendung zu erreichen, wird SnO₂ als ein alternatives Läutermittel der Glasschmelze zugesetzt. Ferner kann das physikalische Läuterverfahren der Hochtemperaturläuterung bei Temperaturen oberhalb ca. 1700 °C die geforderten Blasenqualitäten sicherstellen. Bei besonders hohen Anforderungen an die Blasenqualität kann es notwendig werden, den Einsatz alternativer chemischer Läutermittel mit einem physikalischen Läuterverfahren zu kombinieren, wie z.B. den Einsatz von SnO₂ und Hochtemperaturläuterung.

Die Zusammensetzung und die Keramisierungsbedingungen bestimmen das Gefüge und damit die Eigenschaften der Glaskeramik. Das Gefüge besteht im wesentlichen aus dem Hochquarz-Mischkristall als vorherrschender Kristallphase und einem Restglas aus Komponenten, die nicht in den Hochquarz eingebaut werden. Dieses Gefüge ist verantwortlich für das thermische Ausdehnungsverhalten über der Temperatur, das für die Glaskeramiken einen Schlüsseleigenschaft darstellt.

Li₂O, Al₂O₃ und SiO₂ in den bevorzugten, angegebenen Grenzen sind notwendige Komponenten in der Hochquarz-Mischkristallphase. Als weitere Komponenten können MgO, ZnO und P₂O₅ in die Hochquarz-Mischkristalle eingebaut werden. Die Zugabe der Alkalien Na₂O, K₂O sowie der Erdalkalien CaO, SrO, BaO verbessert die Schmelzbarkeit und das Entglasungsverhalten des Glases. Die Gehalte sind begrenzt, weil diese Komponenten im Wesentlichen in der Restglasphase der Glaskeramik verbleiben und die thermische Ausdehnung bei zu hohen Gehalten in unerwünschter Weise erhöhen. Auch können höhere Gehalte das Kristallisationsverhalten beeinträchtigen. TiO₂ und gegebenenfalls ZrO₂ und SnO₂ sind als Keimbildner erforderlich. Sie bilden während der Keimbildung Keime in hoher Dichte, die für das Aufwachsen der Hochquarz-Mischkristalle bei der Kristallisation als Unterlage dienen. Höhere Gehalte als in der Summe 6,0 Gew.-% verschlechtern das Entglasungsverhalten. Dies gilt besonders für die Komponente SnO₂. Bei Gehalten ab 1 Gew.-% wurde beim Abkühlen und Abstehen von Laborschmelzen bereits an der Oberfläche eine spontane Bildung von Oberflächenkristallen beobachtet. Höhere Gehalte an ZrO₂ als 3 Gew.-% verschlechtern das Einschmelzverhalten des Gemenges bei der Glasherstellung, da die ZrO₂-haltigen Rohstoffe sich durch geringe Auflösungsgeschwindigkeit in der Schmelze auszeichnen. Der TiO₂ Gehalt beträgt zwischen 1,2 und 5,5 Gew.-%. TiO₂ ist als Keimbildner unverzichtbar, der Gehalt sollte mindestens bei 1,2 Gew.-% liegen, damit eine hohe Transparenz der Glaskeramiken aufgrund hoher Keimdichte und damit geringer Kristallitgrößen erreichen werden kann.Der Gehalt sollte 5,5 Gew.-% nicht übersteigen, weil sonst das Entglasungsverhalten verschlechtert wird. Die Glaskeramik besitzt folgende Zusammensetzung (in Gew.-% auf Oxidbasis):

| | |
|---|---|
| Li₂O | 2,5 - 5,5 |
| Na₂O | 0 - 3,0 |
| K₂O | 0 - 3,0 |
| Σ Na₂O+K₂O | 0 - 4,0 |
| MgO | 0 - 3,0 |
| CaO | 0 - 2,5 |
| SrO | 0 - 2,0 |
| BaO | 0 - 3,5 |
| ZnO | 0 - 3,5 |
| Al₂O₃ | 18 - 27 |
| SiO₂ | 52 - 75 |
| TiO₂ | 1,2 - 5,5 |
| ZrO₂ | 0 - 3,0 |
| SnO₂ | < 1,0 |
| Σ TiO₂+ZrO₂+SnO₂ | 2,0 - 6,0 |
| P₂O₅ | 0 - 8,0, |

wobei die dunkle Einfärbung durch einen Zusatz von 0,02 - 0,6 Gew.-% V₂O₅ eingestellt wird.

Vergleichbar hierzu wird in der DE 3703342 C2 eine Glaskeramik und ein Verfahren zu ihrer Herstellung beschrieben, wobei die Glaskeramik in der Glasmatrix dispergierten Hochquarz-Mischkristallen enthält, die ein dunkles oder schwarzes Aussehen besitzen, bei einer IR-Transmission von mindestens 80 % bei 1500 nm, über eine Biegefestigkeit von wenigsten 140 N/mm² verfügen, die Zusammensetzung als Läutermittel 0 - 2 Gew.-% As₂O₃ enthält und die Einfärbung mit 0,03 - 0,5 Gew.-% V₂O₅ erfolgt. Diese Glaskeramik eignet sich aufgrund ihrer dunklen Einfärbung bevorzugt für die Anwendung als Kochfläche.

Die in der beschriebene DE 3703342 C2 Glaskeramik läßt sich nach unseren Untersuchungen jedoch nur dann mit den beanspruchten Eigenschaften nach dem dort beschriebenen Verfahren herstellen, wenn die Zusammensetzung As₂O₃ enthält. Die Zugabe von As₂O₃ ist dabei zwingend erforderlich, um eine dunkles oder schwarzes Aussehen zu erreichen und niedrige Werte der Lichttransmission einzustellen. Die Angabe des Transmissionswertes bei der Lichtwellenlänge 500 nm ist weiterhin nicht geeignet die Einfärbung richtig zu beurteilen, da mit Vanadiumoxid eingefärbte Glaskeramiken hauptsächlich oberhalb dieser Wellenlänge durchlässig werden. Für die Beurteilung der Einfärbung muß daher der gesamte dem Auge zugängliche Spektralbereich, d.h. die Lichttransmission im Sichtbaren herangezogen werden.

Wenn eine geringe Eigenfärbung der Glaskeramiken in transparenter Form (d.h. ohne Vanadiumoxid) gewünscht ist, sollte der TiO₂ Gehalt weniger als 3 Gew.-% bevorzugt weniger als 2,5 Gew.-% betragen, weil sonst der für die Eigenfärbung störende Eisen/Titan-Komplex vermehrt auftritt.

Die Substitution des SiO₂ durch GeO₂ ist möglich, hat aber wegen der Kosten des GeO₂ aus wirtschaftlichen Gründen keine Bedeutung erlangt. Glaskeramiken verfügen abhängig von der Wahl der Gemengerohstoffe und von den Prozeßbedingung bei ihrer Herstellung über einen Wassergehalt der üblicherweise zwischen 0,01 und 0,07 Mol/l liegt.

Neben dem Farboxid Vanadiumoxid in Gehalten zwischen 0,02 bis 0,6 Gew.-% können auch weitere bekannte färbende Komponente, wie z.B. Chrom-, Mangan-, Eisen-, Kobalt-, Nickel-, Kupfer-, Selen-, Chlor-Verbindungen, eingesetzt werden, um die Färbung zu unterstützen und zur Einstellung bestimmter Farborte. Bei dunkel eingefärbten Glaskeramiken, wird dieses weniger gewünscht sein, wenn hohe Transmissionen im IR erforderlich ist, da diese Komponenten in der Regel im IR absorbieren. In transparenter Form kann der Einsatz dieser alternativen färbenden Komponenten gewünscht sein, um einen bestimmten Farbort einzustellen.

Als zugesetztes festes Reduktionsmittel hat sich die Zusammensetzungskomponente SnO₂ bewährt. SnO₂ verfügt vorteilhafterweise auch über eine Läuterwirkung und kombiniert damit die Funktion von Reduktionsmittel und Läutermittel. Als weiterer Vorteil stabilisiert SnO₂, ähnlich wie As₂O₃ oder Sb₂O₃, den pO₂ der Glasschmelze gegenüber der Einwirkung von Sauerstoff aus der Umgebungsluft. Bei dem technisch üblichen Abstehen und Rühren der Schmelze vor der Formgebung, sowie den in der Praxis oft gewünschten Durchsatzänderungen, ist diese Pufferwirkung vorteilhaft, um eine stabile Transmission zu gewährleisten. Unsere Untersuchungen konnten gestützt auf Mößbauer-Messungen zeigen, daß das Zinn ebenso wie Antimon als Redoxpartner für das Vanadium wirkt. Das während der Läuterung durch Sauerstoff-Freigabe entstandene 2-wertige Zinn wirkt beim Keramisieren als Reduktionsmittel für das eingebaute Vanadium und wird zum größten Teil wieder in den 4-wertigen Zustand aufoxidiert (Tabelle 1, Beispiel 4 und 5). Wie die Beispiele 4 und 5 zeigen, erweist sich das Zinn als sehr wirksamer Redoxpartner für das eingebaute Vanadium. Im vanadiumhaltigen Beispiel 5 wird fast das gesamte 2-wertige Zinn des Ausgangsglases beim Keramisieren in den 4-wertigen Zustand aufoxidiert. Gegenüber arsen-/antimonhaltigen Glaskeramiken wird weniger SnO₂ als As₂O₃ oder Sb₂O₃ benötigt. Es ist möglich, die gewünschte Lichttransmission im Sichtbaren mit geringeren V₂O₅-Gehalten zu erreichen. Das Zinnführt offenbar beim Keramisieren zu einem höheren Anteil von Vanadium im färbenden Zustand. Damit lassen sich auch hohe Transmissionswerte im IR erreichen, da der Anteil von Vanadium im nichtfärbenden Zustand gering ist. Es ist sogar möglich, für eine 4 mm dicke Glaskeramik eine Lichtransmission im Sichtbaren von < 1 % und eine IR-Transmission bei 1600 nm von > 80 % zu erreichen (Beispiel 23 bis 27). Diese Kombination ist besonders für Anwendungen als Kochfläche vorteilhaft. Die geringen V₂O₅-Gehalte sind weiterhin von Vorteil, weil das Vanadium ein relativ kostspieliger Rohstoff ist. In der SnO₂-enthaltenden vanadiumfreien Glaskeramik in transparenter Form (Beispiel 4) wird der Wertigkeitswechsel von Zinn beim Keramisieren in geringerem Ausmaß beobachtet. Dies stützt die schon bei der Mößbauer-Analyse des Antimon gewonnene Hypothese für die Färbung mit Vanadium über einen Redoxvorgang. Das Beispiel zeigt, daß es möglich ist, eine transparente arsen-/antimonfreie Glaskeramik durch Zusatz von Vanadium in eine dunkel eingefärbte umzuwandeln. In der transparenten Glaskeramik wirkt das SnO₂ als Läutermittel und als Keimbildner.

Als weitere Reduktionsmittel eignen sich Metalle, Kohlenstoff und/oder aufoxidierbare Kohlenstoff- bzw. Metall-Verbindungen, die üblicherweise in pulvriger und/oder flüssiger Form dem Ausgangsgemenge für die Schmelze zugesetzt werden.

In entsprechender Weise können auch gasförmige Reduktionsmittel eingesetzt werden, um den Redoxzustand der Schmelze zu beeinflussen. Als ein solches gasförmiges Reduktionsmittel eignet sich Formiergas oder ein anderes wasserstoffhaltiges Gas, das in die Schmelze eingeführt wird. Beispiele für Reduktionsmittel sind Al- oder Si-Pulver. Diese Elemente werden aufgrund ihrer hohen Affinität zum Sauerstoff in der Schmelze aufoxidiert und senken den pO₂ der Schmelze ab. Dieser Effekt wird auch durch aufoxidierbare Kohlenstoffverbindungen, wie z.B. SiC, TiC, Zucker, Holzkohle, Formiergas und/oder CO erreicht. Da die genannten Spezies selbst nicht als Redoxpartner zur Verfügung stehen, weil sie z.B. im Falle des Al und des Si nach Oxidation fest in das Glasgerüst eingebaut sind, ist der Mechanismus im wesentlichen der, daß sie den pO₂ der Schmelze soweit absenken, daß leichter reduzierbare Bestandteile der Schmelze statt dessen reduziert werden und damit als Redoxpartner dienen können. Bei der Reduktion des Vanadiums werden sie wieder aufoxidiert.

Das für die Heißformgebung in der Gegend der Verarbeitungstemperatur des Glases geforderte günstige Entglasungsverhalten auch ohne Verwendung von Arsen- oder Antimonoxid macht Anpassungen bei der Zusammensetzung der Glaskeramik erforderlich. Hinsichtlich Entglasung kritische Kristallphasen sind Mullit (Aluminiumsilikat), Baddeleyit (ZrO₂), sowie Hochquarz-Mischkristalle, Keatit-Mischkristalle und SnO₂-enthaltende Kristallphasen. Beim Abkühlen der Glasschmelze auf Verarbeitungstemperatur und darunter ist die obere Entglasungstemperatur (OEG), bei der die erste Kristallphase auftritt, ein Maß für das Entglasungsverhalten. Für die Heißformgebung des Glases in der Nähe der Verarbeitungstemperatur sollte die OEG möglichst weit unter der Verarbeitungstemperatur liegen. Für ein derart verbessertes Entglasungsverhalten ist es erforderlich, die Bestandteile dieser kritischen Kristallphasen sowie den Gehalt an Keimbildnern, insbesondere von SnO₂, zu begrenzen.

Eine bevorzugte Glaskeramik, die eine hohe Entglasungsfestigkeit mit einer oberen Entglasungsgrenze unterhalb der Verarbeitungstemperatur V_{A} aufweist, hat dabei folgende Zusammensetzung (in Gew.-% auf Oxidbasis):

| | |
|---|---|
| Li₂O | 3,0 - 4,5 |
| Na₂O | 0 - 1,5 |
| K₂O | 0 - 1,5 |
| Σ Na₂O+K₂O | 0,2 - 2,0 |
| MgO | 0 - 2,0 |
| CaO | 0 - 2,0 |
| SrO | 0 - 2,0 |
| BaO | 0 - 3,0 |
| ZnO | 0 - 2,5 |
| Al₂O₃ | 19 - 23 |
| SiO₂ | 52 - 70 |
| TiO₂ | 1,5 - 5,3 |
| ZrO₂ | 0 - 2,4 |
| SnO₂ | < 0,5 |
| Σ TiO₂+ZrO₂+SnO₂ | 2,5 - 5,5 |
| P₂O₅ | 0 - 8,0, |

wobei die dunkle Einfärbung durch den Zusatz von 0,02 - 0,6 Gew.-% V₂O₅ eingestellt wird.

Für das Erreichen einer hohen Temperatur/Zeitbelastbarkeit, hinsichtlich Änderung der thermischen Ausdehnung und der Compaction sowie Compaction-Spannung, hat es sich als notwendig erwiesen, den Gehalt an Alkalien und Erdalkalien zu verringern, während die Gehalte an Al₂O₃ und SiO₂ bei höheren Werten gewählt werden müssen. Beider dunklen Einfärbung mit Vanadiumoxid sollte der Gehalt an V₂O₅ nicht mehr als 0,5 Gew.-% betragen, da auch das Vanadiumoxid zu einer Verschlechterung der Temperatur/Zeitbelastbarkeit führt. Bevorzugt besitzt eine erfindungsgemäße Glaskeramik daher folgende Zusammensetzung (in Gew.-% auf Oxidbasis):

| | |
|---|---|
| Li₂O | 3,2 - 4,5 |
| Na₂O | 0 - 1,0 |
| K₂O | 0 - 1,0 |
| Σ Na₂O+K₂O | 0,2 - 1,5 |
| MgO | 10 - 1,5 |
| CaO | 0 - 1,0 |
| SrO | 0 - 1,5 |
| BaO | 0 - 2,5 |
| ZnO | 0 - 2,5 |
| Al₂O₃ | 20 - 25 |
| SiO₂ | 60 - 72 |
| TiO₂ | 1,5 - 5,3 |
| ZrO₂ | 0 - 2,4 |
| SnO₂ | < 0,6 |
| Σ TiO₂+ZrO₂+SnO₂ | 2,5 - 5,5 |
| P₂O₅ | 0 - 3,0, |

wobei die dunkle Einfärbung durch einen Zusatz von 0,02 - 0,5 Gew.-% V₂O₅ eingestellt wird.

Bei der chemischen Beständigkeit werden besonders hohe Anforderungen an die Säurebeständigkeit gestellt. Die im praktischen Einsatz geforderte hydrolytische Beständigkeit und Laugenbeständigkeit wird mit den erfindungsgemäßen Zusammensetzungen ohne Probleme erreicht. Hinsichtlich der Säurebeständigkeit sind besonders P₂O₅ und die Erdalkalien CaO, BaO, sowie die Alkalien, V₂O₅ und in geringerem Ausmaß auch höhere Gehalte von Al₂O₃ nachteilig. Bevorzugt besitzt diesbezüglich eine erfindungsgemäße Glaskeramik folgende Zusammensetzung (in Gew.-% auf Oxidbasis):

| | |
|---|---|
| Li₂O | 3,2 - 4,5 |
| Na₂O | 0 - 1,0 |
| K₂O | 0 - 1,0 |
| Σ Na₂O+K₂O | 0,2 - 1,5 |
| MgO | 0 - 2,0 |
| CaO | 0 - 1,0 |
| SrO | 0 - 1,5 |
| BaO | 0 - 2,0 |
| ZnO | 0 - 2,5 |
| Al₂O₃ | 19 - 23 |
| SiO₂ | 62 - 72 |
| TiO₂ | 1,5 - 5,3 |
| ZrO₂ | 0 - 2,5 |
| SnO₂ | <0,6 |
| Σ TiO₂+ZrO₂+SnO₂ | 2,5 - 5,5 |
| P₂O₅ | 0 - 2,0, |

wobei die dunkle Einfärbung durch einen Zusatz von 0,02 - 0,5 Gew.-% V₂O₅ eingestellt wird.

Die deutliche Verbesserung der Stabilität der Transmission gegenüber Temperatur/Zeitbelastung (Nachdunklung) wird infolge des fehlenden Antimons bzw. Arsens beobachtet. Es wird dahingehend gedeutet, daß das überschüssige 3-wertige Antimon bzw. Arsen auch beim praktischen Einsatz der Glaskeramik bei hohen Temperaturen z.B. in den Kochzonen von Kochflächen noch in der Lage ist, das Vanadium zu reduzieren und vom nicht färbenden in den färbenden Zustand zu überführen. Eine besonders gute Stabilität der Transmission gegenüber nachfolgenden Zeit/Temperaturbelastungen in der Praxis wird mit dem angegebenen Zusammensetzungsbereich (in Gew.-% auf Oxidbasis) erreicht:

| | |
|---|---|
| Li₂O | 3,2 - 4,5 |
| Na₂O | 0 - 1,0 |
| K₂O | 0 - 1.0 |
| Σ Na₂O+K₂O | 0,2 - 1,5 |
| MgO | 0 - 1,5 |
| CaO | 0 - 1,0 |
| SrO | 0 - 1,5 |
| BaO | 0 - 2,0 |
| ZnO | 0 - 2,0 |
| Al₂O₃ | 20 - 23 |
| SiO₂ | 62 - 70 |
| TiO₂ | 1,5 - 5,0 |
| ZrO₂ | 0 - 2,4 |
| SnO₂ | <0,4 |
| Σ TiO₂+ZrO₂+SnO₂ | 2,5 - 5,5 |
| P₂O₅ | 0 - 3,0, |

wobei die dunkle Einfärbung durch einen Zusatz von 0,02 - 0,3 Gew.-% V₂O₅ eingestellt wird.

Die für die chemischen Läutermittel Arsen- und Antimonoxid geltende Umweltproblematik trifft auch in geringerem Maße auf das Bariumoxid zu. Bariumhaltige Rohstoffe, insbesondere wenn sie wasserlöslich sind, wie z.B. Bariumchlorid und Bariumnitrat sind toxisch und erfordern besondere Vorsichtsmaßnahmen beim Einsatz. In den erfindungsgemäßen Glaskeramikzusammensetzungen ist es möglich, auf den Einsatz von BaO zu verzichten, insbesondere bis auf unvermeidliche Spuren.

Die Glaskeramikzusammensetzungen können ähnlich wie bekannte Glaskeramiken durch eine zusätzliche Temperaturbehandlung bei Temperaturen zwischen ca. 900 und 1200°C in eine Keatit-Mischkristall enthaltende Glaskeramik umgewandelt werden. Glaskeramiken dieses Typs verfügen über eine höhere Temperaturbelastbarkeit, allerdings zu Lasten einer Erhöhung des thermischen Ausdehnungskoeffizienten, der zwischen Raumtemperatur und 700°C in der Größenordnung von ca. 1 x 10⁻⁶/K liegt. Diese Umwandlung ist in der Regel mit einem Kristallwachstum verbunden, so daß die mit Hochquarz-Mischkristall enthaltenden Glaskeramiken erreichbare Transparenz üblicherweise verloren geht. Die Keatit-Mlschkristall enthaltenen Glaskeramiken sind meist transluzent bis opak weiß. Bei Verwendung von Farboxiden wird der Weißton entsprechend überfärbt.

Vorzugsweise findet eine nach dem erfindungsgemäßen Verfahren hergestellte Glaskeramik Verwendung als Brandschutzglas, Kaminsichtscheibe, Kochgeschirr und als beheizbare Platte zum Kochen und Grillen, sowie als Substratmaterial für Waferstages oder Spiegelträger für Teleskope.

Die vorliegende Erfindung wird mit Hilfe der folgenden Beispiele weiter verdeutlicht.

Für einige Beispiele sind in Tabelle 1 und 2 Zusammensetzungen der Glaskeramikausgangsgläser aufgeführt. In Tabelle 1 und 3 sind die Eigenschaften der zugehörigen Glaskeramiken zusammengestellt.

Die Vergleichsbeispiele von Tabelle 1 verdeutlichen den Redoxvorgang, der für die Einfärbung durch Vanadiumoxid beim Keramisieren erforderlich ist und wurden insbesondere im Zusammenhang mit den Ergebnissen der Mößbauermessungen bereits im Text diskutiert. Die Ausgangsgläser von Tabelle 1 wurden, unter Verwendung von in der Glasindustrie üblichen Rohstoffen, bei Temperaturen von ca. 1620°C erschmolzen und geläutert. Nach dem Schmelzen in Tiegeln aus gesintertem Kieselglas wurden die Schmelzen in Platintiegel umgegossen und bei Temperaturen von ca. 1580°C über 30 Minuten homogenisiert. Nach Abstehen bei ca, 1640°C, 1 Stunde wurden Gußstücke von ca. 140 x 100 x 30 mm Größe gegossen und in einem Kühlofen beginnend ab ca. 660°C auf Raumtemperatur abgekühlt. Aus diesen Gußstücken wurden die Prüfmuster, z.B. Stäbe für die Messung des thermischen Ausdehnungskoeffizienten und Plättchen für die Messung der Transmission, herauspräpariert. Die noch glasigen Muster wurden anschließend mit den aufgeführten Keimbildungs- und Kristallisationsbedingungen in die Glaskeramik umgewandelt. Nach schnellem Aufheizen auf 600°C wird das Aufheizen auf die Keimbildungstemperatur und die weitere Erhöhung von Keimbildungstemperatur auf Kristallisationstemperatur mit einer einheitlichen Heizrate von 2,5°C/min durchgeführt. Die Abkühlung von Maximaltemperatur erfolgt bis ca. 600°C mit einer Abkühlrate von ca. 4°C/min, anschließend durch Abschalten der Ofenheizung. Die Beispiele 1 und 2 sind konventionell mit Antimon geläuterte Glaskeramiken und sind zu Vergleichszwecken ausgeführt. Durch die Wirkung des eingebauten Antimons als Redoxpartner für das Vanadiumoxid ist es möglich, sowohl transparente als auch dunkel eingefärbte Glaskeramiken mit Hochquarz-Mischkristall als vorherrschende Kristallphase zu realisieren. Das Vergleichsbeispiel 3 zeigt, dass es bei fehlendem Antimon nur mit Vanadiumoxid allein ohne Redoxpartner nicht möglich ist, die dunkle Einfärbung zu erreichen. Die Beispiele 4 und 5 zeigen, dass es bei Verwendung von SnO₂ als Reduktionsmittel, sowohl möglich ist, eine transparente Glaskeramik zu realisieren (Beispiel 4), als auch bei Zusatz von Vanadiumoxid eine dunkel eingefärbte Glaskeramik (Beispiel 5). Beispiel 4 ist mangels Zusatz von Vandadiumoxid als Vergleichsbeispiel zu betrachten. Die Verwendung von Formiergas als Reduktionsmittel zeigt Beispiel 6. Das Formiergas mit einer Zusammensetzung H₂/N₂ = 5/95 Vol.-% wurde 3 Stunden lang mit 2,3 l/min in die 1640°C heiße Glasschmelze eingeleitet. Die Beispiele 1 bis 6 verfügen über gleiche Grundzusammensetzung und unterscheiden sich nur durch die Zusätze an Farboxid, Läuter- und Reduktionsmittel. Beispiel 7 ist eine Grundzusammensetzung, die reich ist an dem Keimbildneroxid TiO₂, weil auf den Keimbildner ZrO₂ verzichtet wird. Als Reduktionsmittel wird 0,1 Gew.-% Holzkohle dem Ausgangsgemenge für die Glasschmelze zugesetzt.

Die Messung des Lichttransmissionsgrades τ im Bereich des sichtbaren Lichtes erfolgt nach DIN 5033. Die Beispiele zeigen wie effektiv mit den eingesetzten Reduktionsmitteln die Einfärbung durch Vanadiumoxid erreicht wird. Mit den Beispielen 6 und 7 wird bei 4 mm Dicke für das menschliche Auge fast vollständige Undurchsichtigkeit erreicht. Die Transmission im sichtbaren Grenzbereich bei 700 nm ist sehr gering. Durch Verringerung des V₂O₅- Gehaltes oder des Reduktionsmittels lassen sich auch problemlos höhere Lichttransmissionsgrade und damit verbunden auch höhere Werte für die IR-Transmission einstellen. Ebenso sind die gewünschten niedrigen Werte der Lichttransmission mit den eingesetzten Reduktionsmitteln auch für kleinere Dicken als 4 mm zu erreichen.

Die Gußstücke Beispiele 4 und 5 zeichnen sich durch eine ähnlich gute Blasenqualität wie die Gußstücke der konventionell mit Antimon geläuterten Beispiel 1 und 2 aus, da das SnO₂ bei hohen Temperaturen, wie sie für die Glaskeramikschmelze üblich sind, als Läutermittel wirkt. Das läutermittelfreie Vergleichsbeispiel 3 ist dagegen sehr blasig, läßt sich bezüglich seines Transmissionsverhaltens aber eindeutig charakterisieren.

Die Beispiele der Tabelle 1 verfügen aufgrund ihres Gehaltes an Hochquarz-Mischkristallen als vorherrschender Kristallphase über die gewünschten sehr niedrige Werte der thermischen Ausdehnung gemessen im Temperaturbereich zwischen Raumtemperatur und 700 °C.

Ausführungsbeispiele sind aus Tabelle 2 und 3 ersichtlich. Tabelle 2 zeigt die Zusammensetzung und Eigenschaften der Ausgangsgläser. Bei den in Tabelle 2 angegebenen Kristallphasen handelt es sich um, hinsichtlich der oberen Entglasungstemperatur, kritische Kristallphasen. Tabelle 3 zeigt die Keramisierungsbedingungen und die Eigenschaften der erhaltenen Glaskeramiken.

Bei den Beispielen wurde zum Erreichen guter Blasenqualitäten eine Hochtemperaturläuterung eingesetzt. Als Reduktionsmittel und bei hohen Temperaturen wirksames Läutermittel wird die Zusammensetzungskomponente SnO₂ verwendet. Die Ausgangsgläser wurden , unter Verwendung von in der Glasindustrie üblichen Rohstoffen, in einem hochfrequenzbeheizten 4 I-Tiegel aus gesintertem Kieselglas bei Temperaturen um 1750 °C eingeschmolzen. Nachdem das Gemenge vollständig aufgeschmolzen war, wurde bei 1975 °C, 1 Stunde geläutert. Bei den hohen Temperaturen wird infolge niedriger Viskosität der Glasschmelze eine hohe Geschwindigkeit für den Blasenaufstieg und damit eine gute Blasenqualität erreicht. Vor Ausgießen der geläuterten Glasschmelze wurde die Temperatur auf etwa 1750 °C abgesenkt und Gußstücke von ca 170 x 250 x 50 mm Größe gegossen. Die Gußstück wurden zur Vermeidung von Spannungen in einem Kühlofen beginnend bei einer Temperatur von etwa 15 °C unter der Transformationstemperatur der Gläser auf Raumtemperatur abgekühlt. Aus den Gußstücken wurden die Prüfmuster für die Messungen präpariert.

Die Vergleichsbeispiele 8, 9 und 10 aus Tabelle 2 und 3 entsprechen kommerziellen mit As₂O₃ und/oder Sb₂O₃ geläuterten Glaskeramiken, die bereits bezüglich ihrer Eigenschaften optimiert wurden.

Die oberen Entglasungstemperaturen (OEG) liegen wie gewünscht unterhalb des Verarbeitungstemperaturen V_{A} der Gläser (Tabelle 2). Die bei der OEG auftretenden kritischen Kristallphasen sind in der Tabelle aufgeführt. Zur Messung der OEG werden die Gläser in Platintiegeln aufgeschmolzen. Anschließen werden die Platintiegel für 5 Stunden bei verschiedenen Temperaturen im Bereich der Verarbeitungstemperatur gehalten. Die oberste Temperatur bei der die ersten Kristalle auftreten bestimmt die OEG.

Der Keramisierung wurde wie bei den vorhergehenden Beispielen durchgeführt. Die Keimbildungs- und Kristallisationsbedingungen sind aus der Tabelle 3 ersichtlich. Die Heizraten entsprechen denen der Beispiele aus Tabelle 1. Die Beispiele verfügen aufgrund ihres Gehaltes an Hochquarz-Mischkristallen als vorherrschender Kristallphase über die gewünschten sehr niedrigen Werte für die thermische Ausdehnung gemessen im Temperaturbereich zwischen Raumtemperatur und 700°C.

Mit den erfindungsgemäßen Beispielen wird auch ohne Verwendung von As₂O₃ oder Sb₂O₃ die geforderte niedrige Lichttransmission erreicht. Die Temperatur/Zeitbelastbarkeit ist gegenüber den Vergleichsbeispielen deutlich verbessert. Bei nachfolgenden Temperungen ändern sich thermische Ausdehnung, Transmission (Nachdunkelung) in geringerem Ausmaß. Compaction sowie die damit verbundene Compaction-Spannung der erfindungsgemäßen Glaskeramiken sind verbessert. In der Tabelle 3 sind die verwendeten Temperbedingungen angegeben. Die Compaction wird als Längenänderung eines 100 mm langen Stabes bei Temperung gemessen. Die Säurebeständigkeit der erfindungsgemäßen Glaskeramiken wird als Werkstoffprüfung an Platten mit polierter Oberflächen nach DIN 12116 gemessen. Die Tabelle 3 zeigt sowohl den Gewichtsverlust der Prüfplatten bei der Säurebehandlung als auch die Einstufung in die DIN-Klasse.

Das Beispiel 28 zeigt als Vergleichsbeispiel eine transparente Glaskeramik, die mit V₂O₅ einfärbbar ist. Die Tabelle 3 zeigt die Eigenschaften für die Glaskeramik mit Hochquarz-Mischkristall als vorherrschender Kristallphase. Durch eine zusätzliche Temperaturbehandlung bei 1100°C, 2h wurde die transparente Glaskeramik in eine weiße Glaskeramik mit Keatit-Mischkristall als vorherrschende Kristallphase umgewandelt.

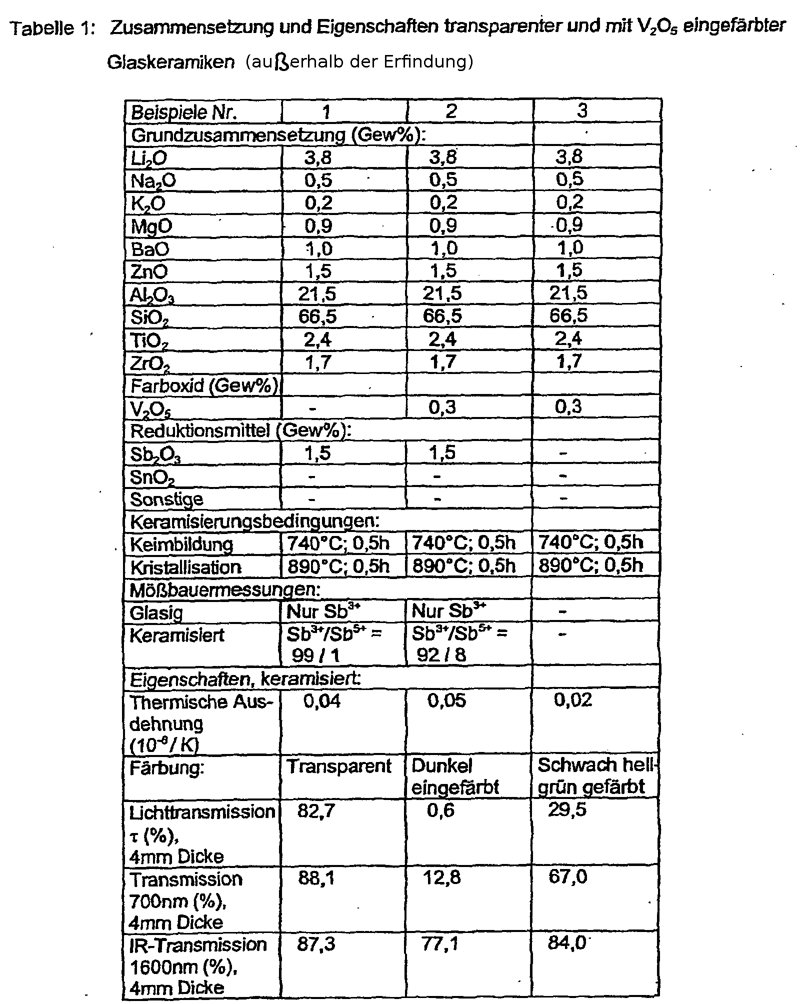

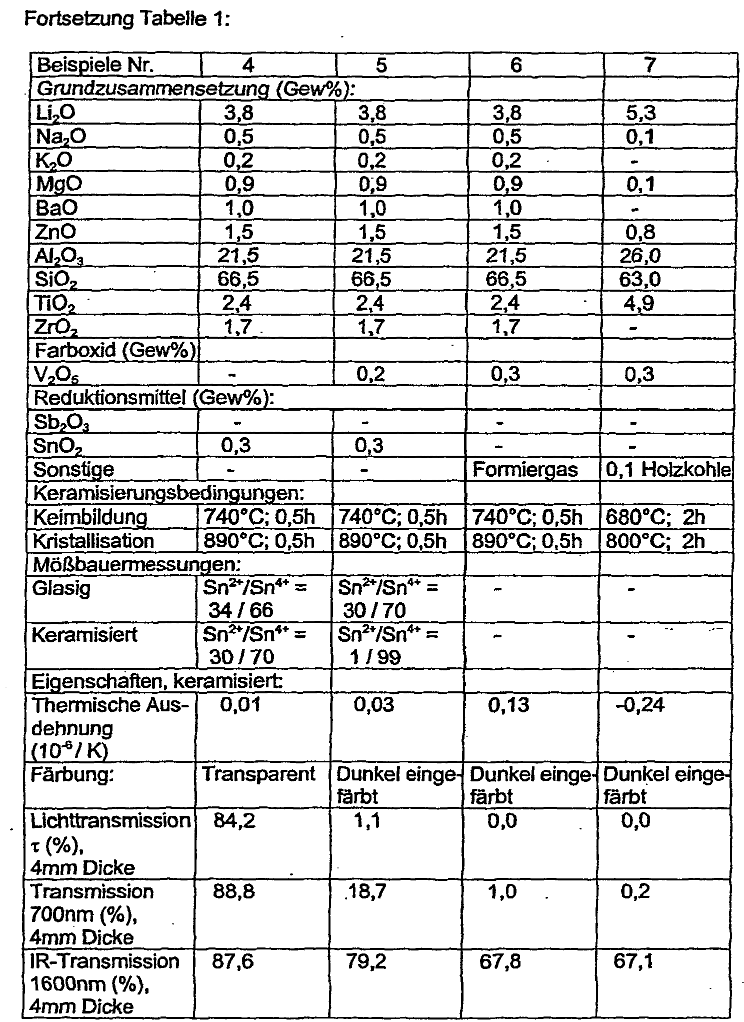

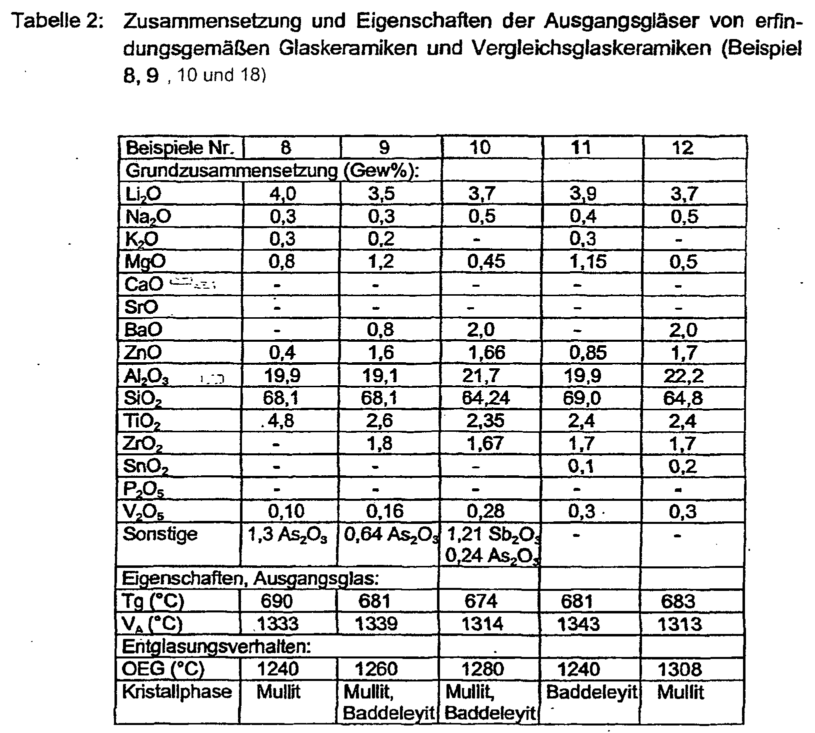

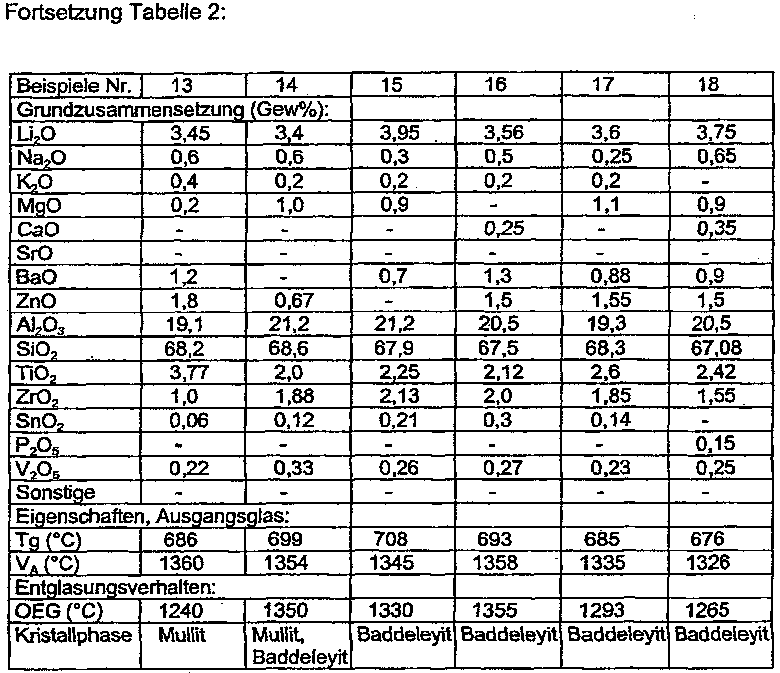

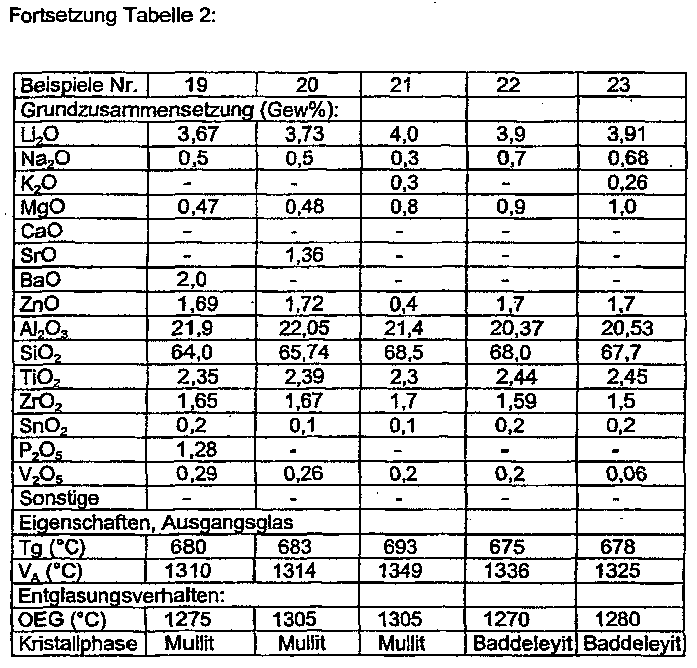

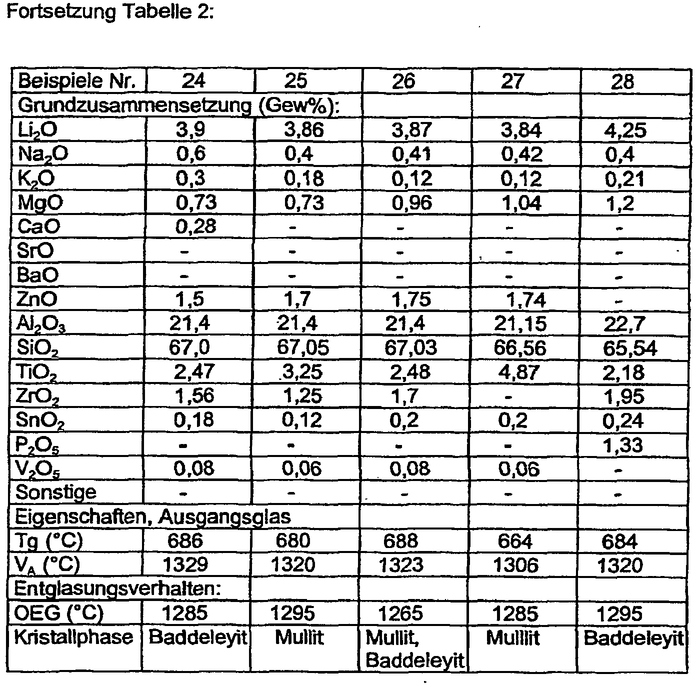

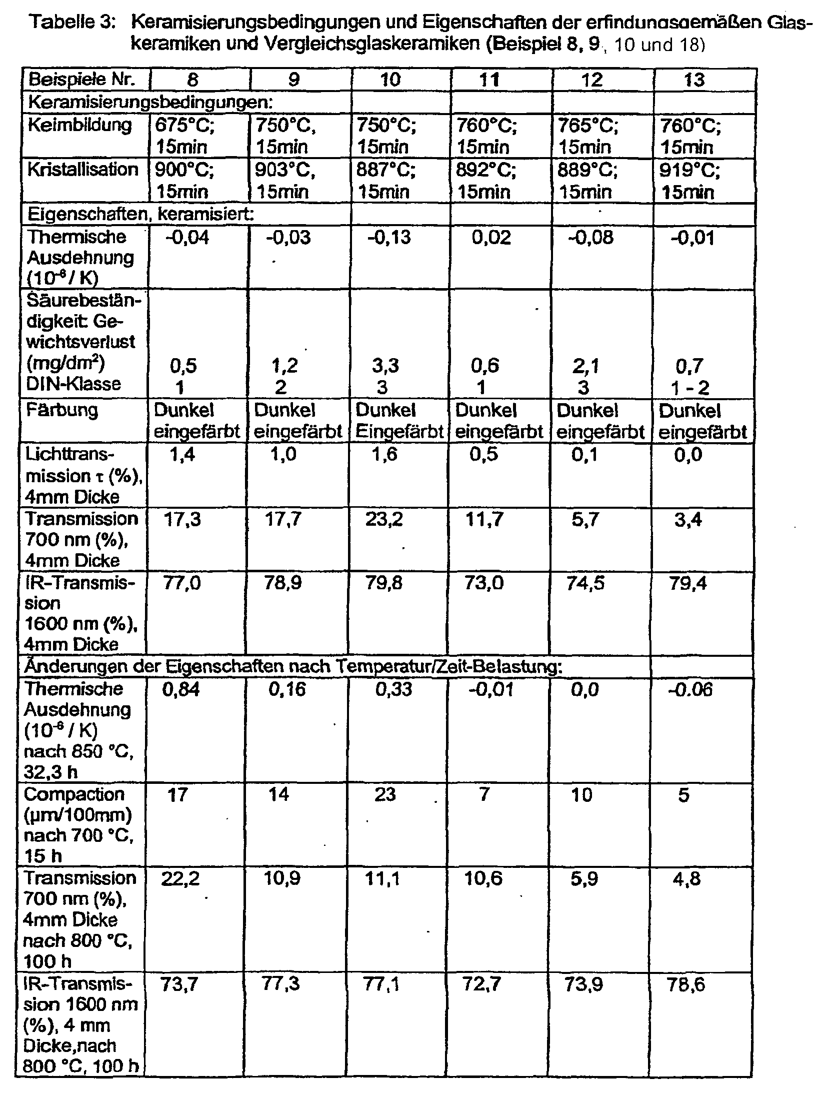

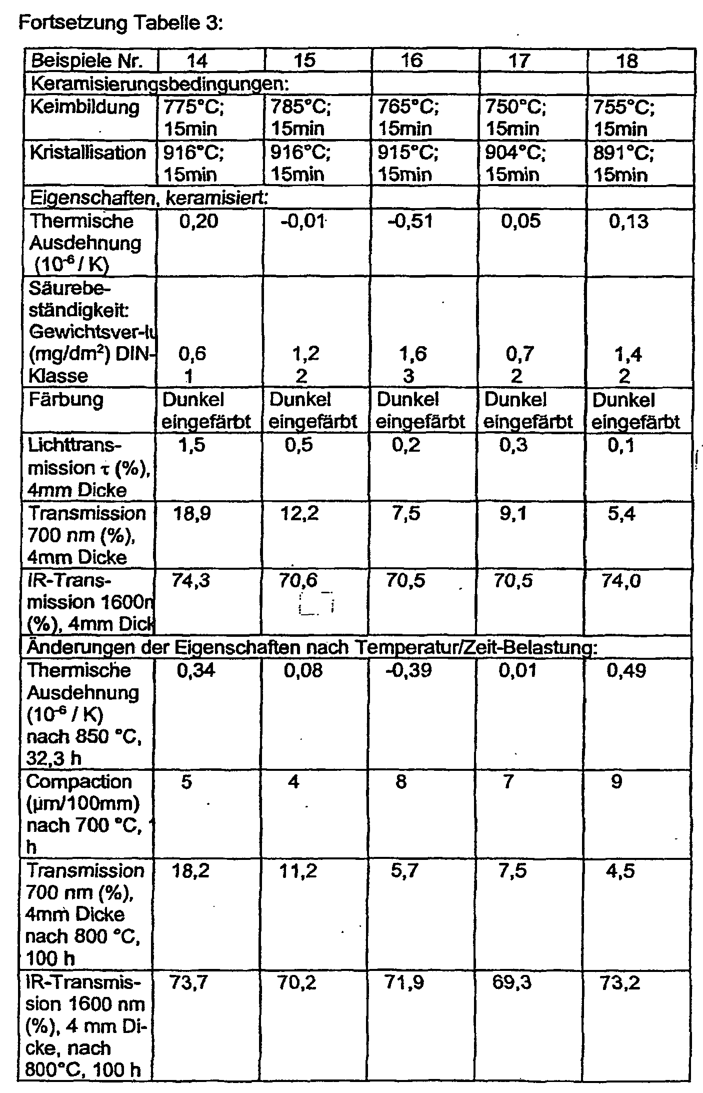

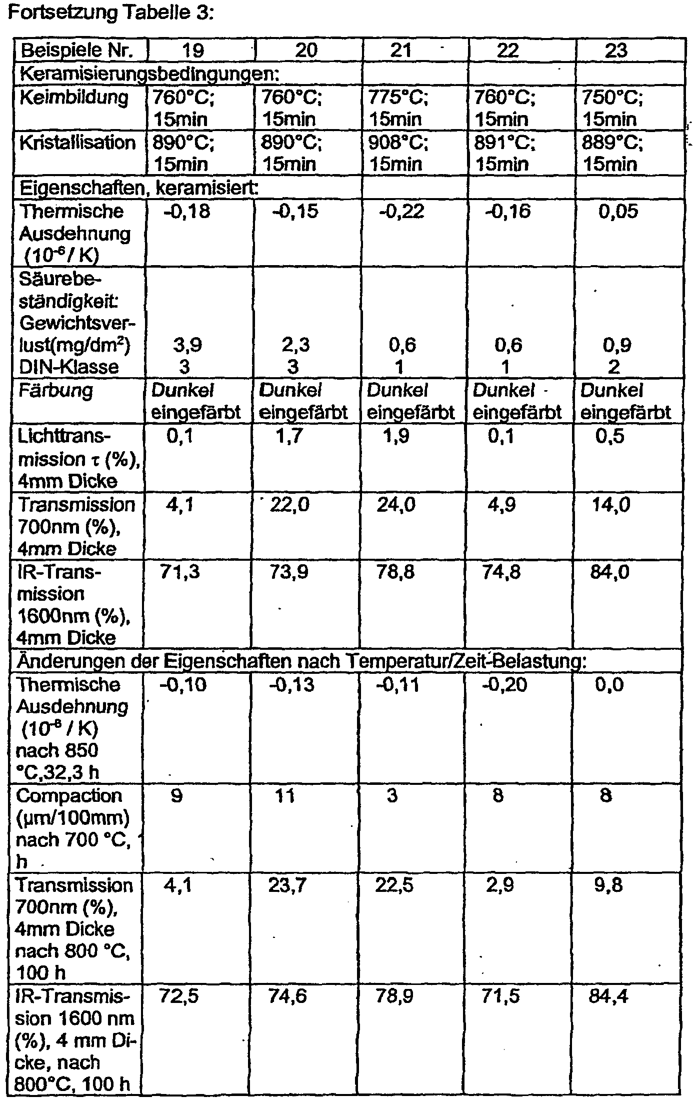

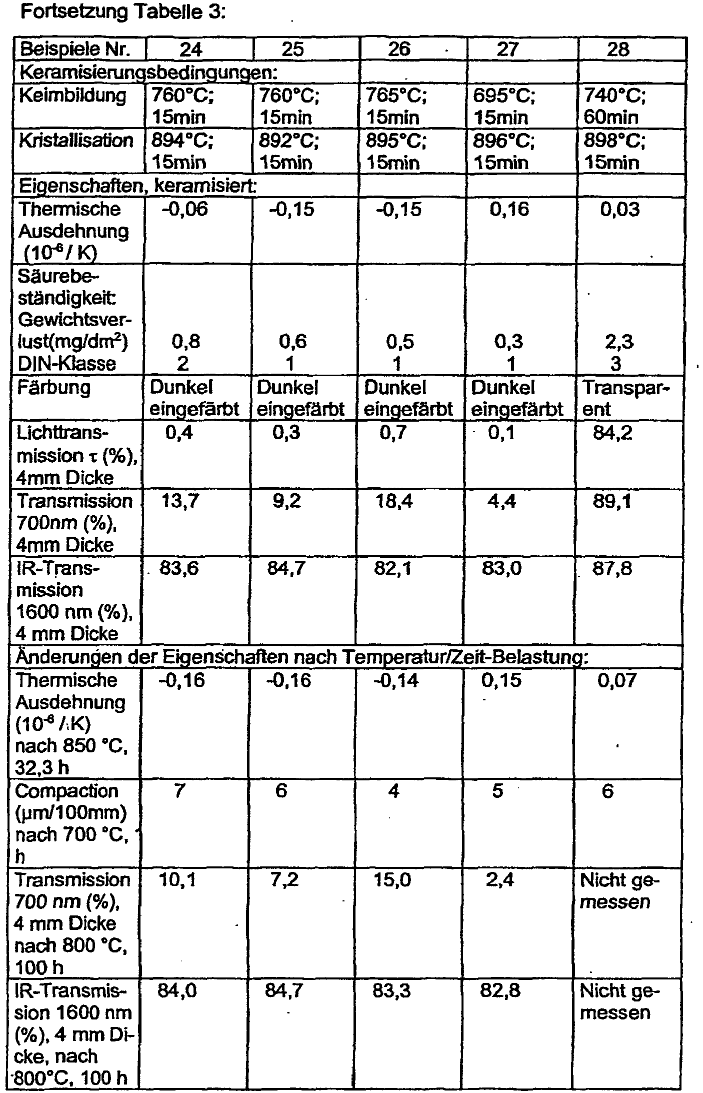

## Patentansprüche

1. Verfahren zur Herstellung einer transparenten, mit Vanadiumoxid-Zusatz dunkel eingefärbten Glaskeramik mit Hochquarz-Mischkristallen als vorherrschende Kristallphase, wobei, bis auf unvermeidbare Spuren, auf die chemischen Läutermittel Arsenoxid und Antimonoxid verzichtet wird, **dadurch gekennzeichnet**,
dass eine Zusammensetzung (in Gew.-% auf Oxidbasis):
| | |
|---|---|
| Li₂O | 2,5 - 5,5 |
| Na₂O | 0 - 3,0 |
| K₂O | 0 - 3,0 |
| ∑ Na₂O+K₂O. | 0 - 4,0 |
| MgO | 0 - 3,0 |
| CaO | 0 - 2,5 |
| SrO | 0 - 2,0 |
| BaO | 0 - 3,5 |
| ZnO | 0 - 3,5 |
| Al₂O₃ | 18 - 27 |
| SiO₂ | 52 - 75 |
| TiO₂ | 1,2 - 5,5 |
| ZrO₂ | 0 - 3,0 |
| SnO₂ | < 1,0 |
| ∑ TiO₂+ZrO₂+SnO₂ | 2,0 - 6,0 |
| P₂O₅ | 0 - 8,0 |
verwendet wird und
dass die dunkel eingefärbte Glaskeramik mit einer Lichttransmission im Sichtbaren von τ < 5 % und einer IR-Transmission bei 1600 nm von größer 65 % für die 4 mm dicke Glaskeramik durch eine Kombination von 0,02 - 0,6 Gew.-% V₂O₅ und ggf. durch Zusatz weiterer färbender Komponenten wie Cr-, Mn-, Fe-, Co-, Cu-, Ni-, Se-, Cl-Verbindungen zur Unterstützung der Färbung und Einstellung bestimmter Farborte mit SnO₂ als ein der Glasschmelze zugesetztes festes Reduktions- und Läutermittel sowie einer Läuterung der Glasschmelze bei Temperaturen oberhalb 1700°C eingestellt wird.

2. Verfahren zur Herstellung einer Glaskeramik nach Anspruch 1, dadurch **gekennzeichnet,** dass eine Lichttransmission im Sichtbaren von τ < 2,5 % und eine IR-Transmission bei 1600 nm von größer 70 % für die 4 mm dicke, durch Kombination des Farboxids Vanadiumoxid mit SnO₂ als ein der Glasschmelze zugesetztes festes Reduktions- und Läutermittel dunkel eingefärbte Glaskeramik eingestellt wird.

3. Verfahren zur Herstellung einer Glaskeramik nach wenigstens einem der vorhergehenden Ansprüche, **gekennzeichnet** dadurch, dass zum Erreichen einer geringen Blasenzahl der Glaskeramik wenigstens ein weiteres chemisches Läutermittel, wie z. B. CeO₂, Sulfatverbindungen, Chlorid-Verbindungen, der Glasschmelze zugesetzt wird und/oder die Glasschmelze physikalisch, z.B. mittels Unterdruck, geläutert wird.

4. Verfahren zur Herstellung einer Glaskeramik nach wenigstens einem der vorhergehenden Ansprüche, **gekennzeichnet dadurch**, dass ein TiO₂-Gehalt von weniger als 3 Gew.-% eingestellt wird, bevorzugt weniger als 2,5 Gew.-%.

5. Verfahren zur Herstellung einer Glaskeramik nach wenigstens einem der vorhergehenden Ansprüche, **gekennzeichnet dadurch**, dass Metalle, Kohlenstoff und/oder aufoxidierbare Kohlenstoff- und/oder Metallverbindungen als weitere Reduktionsmittel verwendet werden, wobei die Reduktionsmittel bevorzugt dem Ausgangsgemenge der Glasschmelze zugesetzt werden.

6. Verfahren zur Herstellung einer Glaskeramik nach wenigstens einem der vorhergehenden Ansprüche, **gekennzeichnet dadurch**, dass Formiergase und/oder andere wasserstoffhaltige Gase als Reduktionsmittel verwendet werden, wobei die Reduktionsmittel bevorzugt in die Glasschmelze eingeführt bzw. eingeleitet werden.

7. Verfahren zur Herstellung einer Glaskeramik nach wenigstens einem der vorhergehenden Ansprüche, **gekennzeichnet** durch eine hohe Entglasungsfestigkeit mit einer oberen Entglasungsgrenze unterhalb der Verarbeitungstemperatur V_{A}, wobei eine Zusammensetzung (in Gew.-% auf Oxidbasis) von:
| | |
|---|---|
| Li₂O | 3,0 - 4,5 |
| Na₂O | 0 - 1,5 |
| K₂O | 0 - 1,5 |
| ∑ Na₂O+K₂O | 0,2 - 2,0 |
| MgO | 0 - 2,0 |
| CaO | 0 - 2,0 |
| SrO | 0 - 2,0 |
| BaO | 0 - 3,0 |
| ZnO | 0 - 2,5 |
| Al₂O₃ | 19 - 23 |
| SiO₂ | 52-70 |
| TiO₂ | 1,5 - 5,3 |
| ZrO₂ | 0 - 2,4 |
| SnO₂ | < 0,5 |
| ∑ TiO₂+ZrO₂+SnO₂ | 2,5 - 5,5 |
| P₂O₅ | 0 - 8,0 |
verwendet und die dunkle Einfärbung durch den Zusatz von 0,02 - 0,6 Gew.-% V₂O₅ eingestellt wird.

8. Verfahren zur Herstellung einer Glaskeramik nach wenigstens einem der vorhergehenden Ansprüche, **gekennzeichnet** durch eine hohe Temperatur/Zeit-Belastbarkeit hinsichtlich Änderungen der thermischen Ausdehnung und der Compaction sowie Compaction-Spannung, wobei eine Zusammensetzung (in Gew.-% auf Oxidbasis) von:
| | |
|---|---|
| Li₂O | 3,2 - 4,5 |
| Na₂O | 0 - 1,0 |
| K₂O | 0 - 1,0 |
| ∑ Na₂O+K₂O | 0,2 - 1,5 |
| MgO | 0 - 1,5 |
| CaO | 0 - 1,0 |
| SrO | 0 - 1,5 |
| BaO | 0 - 2,5 |
| ZnO | 0 - 2,5 |
| Al₂O₃ | 20 - 25 |
| SiO₂ | 60 - 72 |
| TiO₂ | 1,5 - 5,3 |
| ZrO₂ | 0 - 2,4 |
| SnO₂ | < 0,6 |
| ∑ TiO₂+ZrO₂+SnO₂ | 2,5 - 5,5 |
| P₂O₅ | 0 - 3,0 |
verwendet und die dunkle Einfärbung durch den Zusatz von 0,02 - 0,5 Gew.-% V₂O₅ eingestellt wird.

9. Verfahren zur Herstellung einer Glaskeramik nach wenigstens einem der vorhergehenden Ansprüche, gekennzeichnet durch eine gute chemische Beständigkeit, wobei eine Zusammensetzung (in Gew.-% auf Oxidbasis) von:
| | |
|---|---|
| Li₂O | 3,2 - 4,5 |
| Na₂O | 0 - 1,0 |
| K₂O | 0 - 1,0 |
| ∑ Na₂O+K₂O | 0,2 - 1,5 |
| MgO | 0 - 2,0 |
| CaO | 0 - 1,0 |
| SrO | 0 - 1,5 |
| BaO | 0 - 2,0 |
| ZnO | 0 - 2,5 |
| Al₂O₃ | 19 - 23 |
| SiO₂ | 62 - 72 |
| TiO₂ | 1,5 - 5,3 |
| ZrO₂ | 0 - 2,5 |
| SnO₂ | < 0,6 |
| ∑ TiO₂+ZrO₂+SnO₂ | 2,5 - 5,5 |
| P₂O₅ | 0 - 2,0 |
verwendet und die dunkle Einfärbung durch den Zusatz von 0,02 - 0,5 Gew.-% V₂O₅ eingestellt wird.

10. Verfahren zur Herstellung einer Glaskeramik nach wenigstens einem der vorhergehenden Ansprüche, gekennzeichnet durch eine hervorragende Stabilität der Transmission gegenüber Temperatur/Zeit-Belastung, wobei eine Zusammensetzung (in Gew.-% auf Oxidbasis) von:
| | |
|---|---|
| Li₂O | 3,2 - 4,5 |
| Na₂O | 0 - 1,0 |
| K₂O | 0 - 1,0 |
| ∑ Na₂O+K₂O | 0,2 - 1,5 |
| MgO | 0 - 1,5 |
| CaO | 0 - 1,0 |
| SrO | 0 - 1,5 |
| BaO | 0 - 2,0 |
| ZnO | 0 - 2,0 |
| Al₂O₃ | 20 - 23 |
| SiO₂ | 62 - 70 |
| TiO₂ | 1,5 - 5,0 |
| ZrO₂ | 0 - 2,4 |
| SnO₂ | < 0,4 |
| ∑ TiO₂+ZrO₂+SnO₂ | 2,5 - 5,5 |
| P₂O₅ | 0 - 3,0 |
verwendet und die dunkle Einfärbung durch den Zusatz von 0,02 - 0,3 Gew.-% V₂O₅ eingestellt wird.

11. Verfahren zur Herstellung einer Glaskeramik nach wenigstens einem der vorhergehenden Ansprüche, dadurch **gekennzeichnet,** dass zur Herstellung der Glaskeramik, bis auf unvermeidliche Spuren, kein BaO verwendet wird.

12. Verfahren zur Herstellung einer Glaskeramik nach wenigstens einem der vorhergehenden Ansprüche, dadurch **gekennzeichnet,** dass die Glaskeramik durch eine zusätzliche Temperaturbehandlung in eine Keatit-Mischkristall enthaltende Glaskeramik umgewandelt wird.

## Claims

1. Method for producing a transparent glass ceramic that has been darkened by adding vanadium oxide and contains high-quartz solid solutions as the predominant crystal phase, it being possible, except for unavoidable traces, to dispense with the chemical refining agents arsenic oxide and antimony oxide, **characterized in that** a composition (in % by weight, based on oxide):
| | |
|---|---|
| Li₂O | 2.5 - 5.5 |
| Na₂O | 0 - 3.0 |
| K₂O | 0 - 3.0 |
| ∑Na₂O+K₂O | 0 - 4.0 |
| MgO | 0 - 3.0 |
| CaO | 0 - 2.5 |
| SrO | 0 - 2.0 |
| BaO | 0 - 3.5 |
| ZnO | 0 - 3.5 |
| Al₂O₃ | 18 - 27 |
| SiO₂ | 52 - 75 |
| TiO₂ | 1.2 - 5.5 |
| ZrO₂ | 0 - 3.0 |
| SnO₂ | < 1.0 |
| ΣTiO₂+ZrO₂+SnO₂ | 2.0 - 6.0 |
| P₂O₅ | 0 - 8.0 |
is used and **in that** the darkened glass ceramic is adjusted to a light transmittance in the visible range of τ < 5% and an IR transmittance at 1 600 nm of more than 65% for the 4 mm thick glass ceramic by a combination of 0.02 - 0.6% by weight of V₂O₅ and optionally by adding further color-imparting components such as Cr, Mn, Fe, Co, Cu, Ni, Se or Cl compounds for promoting the coloring and establishing of certain color locations with SnO₂ as solid reducing and refining agent added to the glass melt and refining of the glass melt at temperatures above 1700°C.

2. Method for producing glass ceramic according to Claim 1, **characterized in that** a light transmittance in the visible range of τ < 2.5% and an IR transmittance at 1 600 nm of more than 70% for the 4 mm thick glass ceramic darkened by combination of the colored oxide vanadium oxide with SnO₂ as solid reducing and refining agent added to the glass melt is established.

3. Method for producing a glass ceramic according to at least one of the preceding claims, **characterized in that**, in order to achieve a low bubble count for the glass ceramic, at least a further chemical refining agent, such as, for example, CeO₂, sulfate compounds or chloride compounds, is added to the glass melt and/or the glass melt is refined physically, for example by means of reduced pressure.

4. Method for producing a glass ceramic according to at least one of the preceding claims, **characterized in that** a TiO₂ content of less than 3% by weight is established, preferably less than 2.5% by weight.

5. Method for producing a glass ceramic according to at least one of the preceding claims, **characterized in that** metals, carbon and/or oxidizable carbon compounds and/or metal compounds are used as further reducing agents, the reducing agents preferably being added to the starting mixture of the glass melt.

6. Method for producing a glass ceramic according to at least one of the preceding claims, **characterized in that** forming gases and/or other hydrogen-containing gases are used as reducing agents, the reducing agents preferably being introduced or passed into the glass melt.

7. Method for producing a glass ceramic according to at least one of the preceding claims, **characterized by** high devitrification resistance with an upper devitrification limit below the processing temperature V_{A}, a composition (in % by weight, based on oxide) of:
| | |
|---|---|
| Li₂O | 3.0 - 4.5 |
| Na₂O | 0 - 1.5 |
| K₂O | 0 - 1.5 |
| ∑Na₂O+K₂O | 0.2 - 2.0 |
| MgO | 0 - 2.0 |
| CaO | 0 - 2.0 |
| SrO | 0 - 2.0 |
| BaO | 0 - 3.0 |
| ZnO | 0 - 2.5 |
| Al₂O₃ | 19 - 23 |
| SiO₂ | 52 - 70 |
| TiO₂ | 1.5 - 5.3 |
| ZrO₂ | 0 - 2.4 |
| SnO₂ | < 0.5 |
| ∑TiO₂+ZrO₂+SnO₂ | 2.5 - 5.5 |
| P₂O₅ | 0 - 8.0 |
being used and the darkening being established by adding 0.02 - 0.6% by weight of V₂O_{5.}

8. Method for producing a glass ceramic according to at least one of the preceding claims, **characterized by** a high temperature/time load capacity with respect to changes in the thermal expansion and the compaction and compaction stress, a composition (in % by weight, based on oxide) of:
| | |
|---|---|
| Li₂O | 3.2 - 4.5 |
| Na₂O | 0 - 1.0 |
| K₂O | 0 - 1.0 |
| ∑Na₂O+K₂O | 0.2 - 1.5 |
| MgO | 0 - 1.5 |
| CaO | 0 - 1.0 |
| SrO | 0 - 1.5 |
| BaO | 0 - 2.5 |
| ZnO | 0 - 2.5 |
| Al₂O₃ | 20 - 25 |
| SiO₂ | 60 - 72 |
| TiO₂ | 1.5 - 5.3 |
| ZrO₂ | 0 - 2.4 |
| SnO₂ | < 0.6 |
| ∑TiO₂+ZrO₂+SnO₂ | 2.5 - 5.5 |
| P₂O₅ | 0 - 3.0 |
being used and the darkening being established by adding 0.02 - 0.5% by weight of V₂O₅.

9. Method for producing a glass ceramic according to at least one of the preceding claim, **characterized by** good chemical resistance, a composition (in % by weight, based on oxide) of:
| | |
|---|---|
| Li₂O | 3.2 - 4.5 |
| Na₂O | 0 - 1.0 |
| K₂O | 0 - 1.0 |
| ∑Na₂O+K₂O | 0.2 - 1.5 |
| MgO | 0 - 2.0 |
| CaO | 0 - 1.0 |
| SrO | 0 - 1.5 |
| BaO | 0 - 2.0 |
| ZnO | 0 - 2.5 |
| Al₂O₃ | 19 - 23 |
| SiO₂ | 62 - 72 |
| TiO₂ | 1.5 - 5.3 |
| ZrO₂ | 0 - 2.5 |
| SnO₂ | < 0.6 |
| ∑TiO₂+ZrO₂+SnO₂ | 2.5 - 5.5 |
| P₂O₅ | 0 - 2.0 |
being used and the darkening being established by adding 0.02 - 0.5% by weight of V₂O₅.

10. Method for producing a glass ceramic according to at least one of the preceding claims, **characterized by** outstanding stability of the transmission relative to temperature/time loading, a composition (in % by weight, based on oxide) of:
| | |
|---|---|
| Li₂O | 3.2 - 4.5 |
| Na₂O | 0 - 1.0 |
| K₂O | 0 - 1.0 |
| ∑Na₂O+K₂O | 0.2 - 1.5 |
| MgO | 0 - 1.5 |
| CaO | 0 - 1.0 |
| SrO | 0 - 1.5 |
| BaO | 0 - 2.0 |
| ZnO | 0 - 2.0 |
| Al₂O₃ | 20 - 23 |
| SiO₂ | 62 - 70 |
| TiO₂ | 1.5 - 5.0 |
| ZrO₂ | 0 - 2.4 |
| SnO₂ | < 0.4 |
| ∑TiO₂+ZrO₂+SnO₂ | 2.5 - 5.5 |
| P₂O₅ | 0 - 3.0 |
being used and the darkening being established by adding 0.02 - 0.3% by weight of V₂O₅.

11. Method for producing a glass ceramic according to at least one of the preceding claims, **characterized in that**, except for unavoidable traces, no BaO is used for producing the glass ceramic.

12. Method for producing a glass ceramic according to at least one of the preceding claims, **characterized in that** the glass ceramic is transformed into a glass ceramic containing keatite solid solution by an additional thermal treatment.

## Revendications

1. Procédé de fabrication d'une vitrocéramique transparente rendue sombre par l'ajout d'oxyde de vanadium, la phase cristalline dominante étant constituée d'une solution solide à base de quartz-β, sans mise en oeuvre de l'oxyde d'arsenic et de l'oxyde d'antimoine en tant qu'agents chimiques d'affinage, sauf traces inévitables,
caractérisé en ce
que l'on utilise une composition (% en poids, sous forme d'oxydes) comme suit :
| | |
|---|---|
| Li₂O | 2,5 - 5,5 |
| Na₂O | 0 - 3,0 |
| K₂O | 0 - 3,0 |
| ∑ Na₂O+K₂O | 0 - 4,0 |
| MgO | 0 - 3,0 |
| CaO | 0 - 2,5 |
| SrO | 0 - 2,0 |
| BaO | 0 - 3,5 |
| ZnO | 0 - 3,5 |
| Al₂O₃ | 18 - 27 |
| SiO₂ | 52 - 75 |
| TiO₂ | 1,2 - 5,5 |
| ZrO₂ | 0 - 3,0 |
| SnO₂ | < 1,0 |
| Σ TiO₂+ZrO₂+SnO₂ | 2,0 - 6,0 |
| P₂O₅ | 0 - 8,0 |
et
que l'on ajuste la vitrocéramique rendue sombre et présentant, pour une vitrocéramique d'une épaisseur de 4 mm, un taux de transmission de lumière visible τ < 5 % et une transmission IR à 1600 nm supérieure à 65 %, par une combinaison entre, d'une part, 0,02 à 0,6 % % de V₂O₅ et, le cas échéant, l'ajout d'autres composants colorants tels que les composés de Cr, Mn, Fe, Co, Cu, Ni, Se, Cl servant à renforcer la coloration et à ajuster des colorations localisées avec SnO₂ comme agent de réduction et d'affinage solide que l'on ajoute au verre fondu, ainsi qu'en soumettant le verre fondu à un affinage réalisé à des températures supérieures à 1700 °C.

2. Procédé de fabrication d'une vitrocéramique selon la revendication 1, **caractérisé en ce que** l'on ajuste, pour la vitrocéramique d'une épaisseur de 4 mm qui a été rendue sombre par combinaison de l'oxyde colorant, à savoir l'oxyde de vanadium, avec SnO₂ comme agent de réduction et d'affinage solide que l'on ajoute au verre fondu, un taux de transmission de lumière visible τ < 2,5 % et une transmission IR à 1600 nm supérieure à 70 %.

3. Procédé de fabrication d'une vitrocéramique selon au moins une des revendications précédentes, **caractérisé en ce que** l'on ajoute au verre fondu, pour obtenir une vitrocéramique présentant un faible nombre de bulles, au moins un autre agent chimique d'affinage tel que, par exemple, le CeO₂, des composés de type sulfate, des composés de type chlorure et/ou que l'on procède à un affinage physique du verre fondu, par exemple en appliquant une pression sous-atmosphérique.

4. Procédé de fabrication d'une vitrocéramique selon au moins une des revendications précédentes, **caractérisé en ce que** l'on ajuste une teneur en TiO₂ inférieure à 3 % en poids, de préférence inférieure à 2,5 % en poids.

5. Procédé de fabrication d'une vitrocéramique selon au moins une des revendications précédentes, **caractérisé en ce que** l'on utilise, en tant que d'autres agents de réduction, des métaux, du carbone et/ou des composés de carbone et/ou de métaux pouvant être oxydés, lesdits agents de réduction étant préférentiellement ajoutés au mélange solide à la base du verre fondu.

6. Procédé de fabrication d'une vitrocéramique selon au moins une des revendications précédentes, **caractérisé en ce que** l'on utilise, en tant qu'agents de réduction, des gaz de formation et/ou d'autres gaz contenant de l'hydrogène, lesdits agents de réduction étant préférentiellement introduits dans le verre fondu.

7. Procédé de fabrication d'une vitrocéramique selon au moins une des revendications précédentes, **caractérisé en ce que** la résistance à la dévitrification est importante, la limite supérieure de dévitrification se situant en-dessous de la température de travail V_{A}, en utilisant une composition (en % en poids) comme suit :
| | |
|---|---|
| Li₂O | 3,0 - 4,5 |
| Na₂O | 0 - 1,5 |
| K₂O | 0 - 1,5 |
| ∑ Na₂O+K₂O | 0,2 - 2,0 |
| MgO | 0 - 2,0 |
| CaO | 0 - 2,0 |
| SrO | 0 - 2,0 |
| BaO | 0 - 3,0 |
| ZnO | 0 - 2,5 |
| Al₂O₃ | 19 - 23 |
| SiO₂ | 52 - 70 |
| TiO₂ | 1,5 - 5,3 |
| ZrO₂ | 0 - 2,4 |
| SnO₂ | < 0,5 |
| ∑ TiO₂+ZrO₂+SnO₂ | 2,5 - 5,5 |
| P₂O₅ | 0 - 8,0 |
la coloration sombre étant obtenue par l'ajout de 0,02 à 0,6 % en poids de V₂O₅.

8. Procédé de fabrication d'une vitrocéramique selon au moins une des revendications précédentes, **caractérisé en ce que** la résistance de type température/temps par rapport aux variations de la dilatation thermique et du rétrécissement suite à un traitement thermique ainsi que de la tension provoquée par ledit rétrécissement est importante, en utilisant une composition (% en poids, sous forme d'oxydes) comme suit :
| | |
|---|---|
| Li₂O | 3,2 - 4,5 |
| Na₂O | 0 - 1,0 |
| K₂O | 0 - 1,0 |
| ∑ Na₂O+K₂O | 0,2 - 1,5 |
| MgO | 0 - 1,5 |
| CaO | 0 - 1,0 |
| SrO | 0 - 1,5 |
| BaO | 0 - 2,5 |
| ZnO | 0 - 2,5 |
| Al₂O₃ | 20 - 25 |
| SiO₂ | 60 - 72 |
| TiO₂ | 1,5 - 5,3 |
| ZrO₂ | 0 - 2,4 |
| SnO₂ | < 0,6 |
| ∑ TiO₂+ZrO₂+SnO₂ | 2,5 - 5,5 |
| P₂O₅ | 0 - 3,0 |
la coloration sombre étant obtenue par l'ajout de 0,02 à 0,5 % en poids de V₂O₅.

9. Procédé de fabrication d'une vitrocéramique selon au moins une des revendications précédentes, **caractérisé en ce que** la résistance chimique est bonne, en utilisant une composition (% en poids, sous forme d'oxydes) comme suit :
| | |
|---|---|
| Li₂O | 3,2 - 4,5 |
| Na₂O | 0 - 1,0 |
| K₂O | 0 - 1,0 |
| ∑ Na₂O+K₂O | 0,2 - 1,5 |
| MgO | 0 - 2,0 |
| CaO | 0 - 1,0 |
| SrO | 0 - 1,5 |
| BaO | 0 - 2,0 |
| ZnO | 0 - 2,5 |
| Al₂O₃ | 19 - 23 |
| SiO₂ | 62 - 72 |
| TiO₂ | 1,5 - 5,3 |
| ZrO₂ | 0 - 2,5 |
| SnO₂ | < 0,6 |
| ∑ TiO₂+ZrO₂+SnO₂ | 2,5 - 5,5 |
| P₂O₅ | 0 - 2,0 |
la coloration sombre étant obtenue par l'ajout de 0,02 à 0,5 % en poids de V₂O₅.

10. Procédé de fabrication d'une vitrocéramique selon au moins une des revendications précédentes, **caractérisé en ce que** la stabilité de la transmission vis-à-vis des sollicitations de type température/temps est excellente, en utilisant une composition (% en poids, sous forme d'oxydes) comme suit :
| | |
|---|---|
| Li₂O | 3,2 - 4,5 |
| Na₂O | 0 - 1,0 |
| K₂O | 0 - 1,0 |
| ∑ Na₂O+K₂O | 0,2 - 1,5 |
| MgO | 0 - 1,5 |
| CaO | 0 - 1,0 |
| SrO | 0 - 1,5 |
| BaO | 0 - 2,0 |
| ZnO | 0 - 2,0 |
| Al₂O₃ | 20 - 23 |
| SiO₂ | 62 - 70 |
| TiO₂ | 1,5 - 5,0 |
| ZrO₂ | 0 - 2,4 |
| SnO₂ | < 0,4 |
| ∑ TiO₂+ZrO₂+SnO₂ | 2,5 - 5,5 |
| P₂O₅ | 0 - 3,0 |
la coloration sombre étant obtenue par l'ajout de 0,02 à 0,3 % en poids de V₂O₅.

11. Procédé de fabrication d'une vitrocéramique selon au moins une des revendications précédentes, **caractérisé en ce que** l'on n'utilise pas de BaO pour fabriquer ladite vitrocéramique, sauf traces inévitables.

12. Procédé de fabrication d'une vitrocéramique selon au moins une des revendications précédentes, **caractérisé en ce que** ladite vitrocéramique est transformée, par un traitement thermique supplémentaire, en une vitrocéramique contenant de la kéatite en solution solide.
